# EUROPÄISCHE PATENTSCHRIFT

(11) **EP 3 167 537 B1**
(45) Veröffentlichungstag und Bekanntmachung des Hinweises auf die Patenterteilung: **15.08.2018**
(21) Anmeldenummer: 15774568.8
(22) Anmeldetag: 29.09.2015
(51) Int. Cl.: H02K 1/24, H02K 15/02, H02K 15/12, H02K 19/10

(54) **ROTOR MIT HINEINRAGENDEN STEGEN**
ROTOR WITH INWARD FACING BARS
ROTOR DOTÉ D'ARÊTES DÉPASSANT VERS L'INTÉRIEUR

(30) Priorität: 30.09.2014 EP 14186942
(43) Veröffentlichungstag der Anmeldung: 17.05.2017
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(86) Internationale Anmeldenummer: PCT/EP2015/072310
(87) Internationale Veröffentlichungsnummer: WO 2016/050715

(56) Entgegenhaltungen:
- EP-A1- 2 169 805
- JP-A- 2002 095 227

## Beschreibung

Die Erfindung betrifft einen Rotor für eine elektrische Maschine gemäß Oberbegriff des Anspruchs 1. Die Erfindung betrifft auch eine elektrische Maschine, die den Rotor umfasst, ein Kraftfahrzeug, das den Rotor umfasst, und ein Blechpaket für den Rotor. Weiterhin betrifft die Erfindung ein Verfahren zur Herstellung des Rotors und eine Verwendung von Blechen für den Rotor.

Ein derartiger Rotor kann an einer Welle befestigt in der elektrischen Maschine mithilfe einer ersten Lagervorrichtung und einer zweiten Lagervorrichtung um eine Drehachse drehbar gelagert werden.

In einem Betrieb der elektrischen Maschine mit einem derartigen Rotor als Generator wird der Rotor durch mechanische Energie in eine Drehung um die Drehachse versetzt. Durch das magnetische Zusammenwirken zwischen magnetischen Polen des Rotors und des Stator über einen Luftspalt kann die mechanische Energie in elektrische Energie umgewandelt werden. Die elektrische Energie kann an mindestens einer Wicklung, die am Stator befestigt ist und zu einer Bildung der magnetischen Pole des Stators beiträgt, durch Anschließen eines elektrischen Verbrauchers entnommen werden. Zur Bildung der magnetischen Pole des Rotors kann dabei eine unterschiedliche Gestaltung des Rotors in einer Richtung um die Drehachse und/oder eine Einrichtung des Rotors beitragen, die Magnetfelder permanent oder in einem Betrieb der elektrischen Maschine erzeugt.

Bei einem Betrieb der elektrischen Maschine mit einem derartigen Rotor als Motor wird über die mindestens eine Wicklung elektrische Energie zugeführt und durch das magnetische Zusammenwirken zwischen den magnetischen Polen des Stators und des Rotor über den Luftspalt elektrische Energie in mechanische Energie umgewandelt. Dabei wird der Rotor in Drehung um die Drehachse versetzt und es kann an der Welle mechanische Energie an einen mechanischen Verbraucher in Form einer Drehbewegung abgegeben werden.

Weiterhin sind Reluktanzrotoren als Beispiele für einen derartigen Rotor unter anderem aus der US 5,818,140 A bekannt. Darin ist ein Rotor beschrieben, dessen Blechpaket aus Rotorblechen besteht, die Ausstanzungen aufweisen. Zwischen den einzelnen Blechbereichen befindet sich in den durch Ausstanzungen erzeugten Flussleitsperren Luft, die als magnetische Flusssperren wirken. Im Betrieb einer elektrischen Maschine mit diesem Rotor, bilden sich durch die Anisotropie der magnetischen Leitfähigkeit magnetische Pole am Rotor aus, die über den Luftspalt mit den magnetischen Polen des Stator magnetisch zusammenwirken. Die Anisotropie wird bei diesem Rotor durch die Ausstanzungen in den Rotorblechen bewirkt. Die Ausstanzungen führen aber zu einer Schwächung der mechanischen Stabilität des Blechpakets. Die geringere mechanische Stabilität schränkt die Verwendung dieses Rotors abhhängig von der Drehzahl ein.

Aus der JP 2002 095227 A ist ein Reluktanzrotor bekannt, bei dem die Flussleitsperren mit Kunstharz ausgegossen sind. Die radial angrenzenden Blechbereiche weisen hierbei trapezförmige Aussparungen auf, in die das Kunstharz beim Vergießen ebenfalls fließt. Hierdurch sind die Blechbereiche dann über eine Schwalbenschwanzverbindung mit dem ausgehärteten Kunstharz verbunden. Die trapezförmigen Aussparungen in den Blechbereichen beeinträchtigen die Effizienz des Motors und damit die Qualität des Motors, da der magnetische Fluss behindert wird.

Der Erfindung liegt die Aufgabe zugrunde, einen technischen Beitrag für eine elektrische Maschine oder deren Verwendung zu leisten, mit dem ein Rotor für eine Verwendung der elektrische Maschine kostengünstig in hoher Qualität zur Verfügung gestellt werden kann.

Die Aufgabe wird durch einen Rotor mit den Merkmalen des Anspruchs 1 gelöst.

Ein erfindungsgemäßer Rotor für eine elektrische Maschine umfasst
- ein Blechpaket, das sich in einer axialen Richtung von einem ersten axialen Ende zu einem zweiten axialen Ende erstreckt,
- wobei das Blechpaket in der axialen Richtung geschichtete Schichten aufweist,
- wobei jede Schicht mehrere Blechbereiche aufweist,
- wobei Flussleitsperren vorhanden sind, die zwischen angrenzenden Blechbereichen liegen,
- wobei mindestens eine Flussleitsperre mit einer nicht-ferromagnetischen Vergussmasse ausgegossen ist,
- wobei sich die Vergussmasse in der mindestens einen Flussleitsperre jeweils von dem ersten axialen Ende zu dem zweiten axialen Ende erstreckt,
- wobei befestigte Blechbereiche vorhanden sind, die jeweils mindestens einen in die Vergussmasse hineinragenden Steg aufweisen,
- wobei der hineinragende Steg zumindest teilweise in mindestens einer Richtung verläuft, die eine Komponente in der axialen Richtung aufweist,
- wobei in jeder Schicht mindestens ein erster Blechbereich ein befestigter Blechbereich ist.

Die Aufgabe wird auch durch eine elektrische Maschine mit den Merkmalen des Anspruchs 10 gelöst. Eine erfindungsgemäße elektrische Maschine umfasst einen erfindungsgemäßen Rotor und
- einen Stator, der in einem Betrieb der elektrischen Maschine über einen Luftspalt mit dem Rotor magnetisch zusammenwirkt,
- wobei der Rotor um eine Drehachse drehbar gelagert ist, wobei die Drehachse in der axialen Richtung verläuft.

Die Aufgabe wird auch durch ein Kraftfahrzeug mit den Merkmalen des Anspruchs 11 gelöst. Ein erfindungsgemäßes Kraftfahrzeug umfasst einen erfindungsgemäßen Rotor.

Die Aufgabe wird auch durch ein Blechpaket mit den Merkmalen des Anspruchs 12 gelöst. Ein erfindungsgemäßes Blechpaket für einen erfindungsgemäßen Rotor erstreckt sich in einer axialen Richtung von einem ersten axialen Ende zu einem zweiten axialen Ende,
- wobei das Blechpaket in der axialen Richtung geschichtete Schichten aufweist,
- wobei jede Schicht mehrere Blechbereiche aufweist,
- wobei Flussleitsperren vorhanden sind, die zwischen angrenzenden Blechbereichen liegen,
- wobei befestigte Blechbereiche vorhanden sind, die jeweils mindestens einen hineinragenden Steg aufweisen, wobei der hineinragende Steg zumindest teilweise in mindestens einer Richtung verläuft, die eine Komponente in der axialen Richtung aufweist,
- wobei die hineinragenden Stege in Freiräume mindestens einer Flussleitsperre für die Vergussmasse hineinragen,
- wobei in jeder Schicht mindestens ein erster Blechbereich ein befestigter Blechbereich ist.

Die Aufgabe wird auch durch ein Verfahren zur Herstellung eines erfindungsgemäßen Rotors mit den Merkmalen nach Anspruch 13 gelöst. Bei einem erfindungsgemäßen Verfahren zur Herstellung eines erfindungsgemäßen Rotors wird das Blechpaket bereitgestellt,
- das in der axialen Richtung geschichtete Schichten aufweist,
- wobei jede Schicht mehrere Blechbereiche aufweist,
- wobei Freiräume für die Flussleitsperren vorhanden sind, die zwischen angrenzenden Blechbereichen liegen,
- wobei die Freiräume mindestens einer Flussleitsperre in der axialen Richtung zwischen den in die Freiräume hineinragenden Stege ausgegossen werden, wobei die hineinragenden Stege zumindest teilweise in mindestens einer Richtung verlaufen, die eine Komponente in der axialen Richtung aufweist.

Die Aufgabe wird auch durch eine Verwendung von Blechen nach Anspruch 14 gelöst. Bei einer erfindungsgemäßen Verwendung von Blechen für einen erfindungsgemäßen Rotor werden die Bleche für befestigte Blechbereiche des Rotors verwendet,
- die an mindestens einer Flussleitsperre angrenzen, wobei die mindestens eine Flussleitsperre mit der nicht-ferromagnetischen Vergussmasse ausgegossen ist, und
- die in die Vergussmasse hineinragende Stege aufweisen, die zumindest teilweise in mindestens einer Richtung verlaufen, die eine Komponente in der axialen Richtung aufweist.

Die Aufgabe wird erfindungsgemäß vorteilhaft gelöst, indem der Rotor, insbesondere das Blechpaket, vorteilhaft kostengünstig durch die in die Vergussmasse zumindest teilweise in einer Richtung mit einer Komponenten in axialer Richtung hineinragenden Stege vorteilhaft in hoher Qualität mechanisch stabilisiert ist. Durch die Komponente in axialer Richtung und durch das Hineinragen der Stege sind vorteilhaft vorhandene, insbesondere größtenteils vergrößerte Grenzflächen zwischen jedem hineinragenden Steg und der Vergussmasse vorhanden, die für eine mechanische Stabilisierung des Blechpakets durch einen vorteilhaft in axialer Richtung gerichteten Formschluss zwischen den Grenzflächen und der Vergussmasse verwendet werden. Insbesondere können diese Formschlüsse kostengünstig in hoher Qualität einen erfindungsgemäßen Rotor mechanisch stabilisieren, wenn die hineinragenden Stege überwiegend in Richtungen verlaufen, die eine Komponente in axialer Richtung aufweisen. Insbesondere werden hierdurch die Grenzflächen vorteilhaft vergrößert. Zusätzlich wird durch die Komponente in axialer Richtung und durch das Hineinragen der Stege eine mechanische Stabilisierung gegen ein Verschieben eines befestigten Blechbereichs in einer Richtung senkrecht zur axialen Richtung relativ zu einem in axialer Richtung benachbarten befestigten Blechbereich vorteilhaft erreicht. Weiterhin wird der Einfluss der mechanischen Stabilität des Rotors auf einen Betrieb der elektrischen Maschine vorteilhaft reduziert. So wird z.B. eine Reduzierung von Flächen der Blechbereiche vorteilhaft vermieden. So kann vorteilhaft eine Reduzierung der Flächen zum Leiten des magnetischen Flusses in einem Betrieb der elektrischen Maschine vorteilhaft vermieden werden. Dies trägt zu einer hohen Qualität, insbesondere einem hohen Wirkungsgrad, einer erfindungsgemäßen elektrischen Maschine bei.

Bei einem erfindungsgemäßen Rotor ist die mindestens eine Flussleitsperre mit einer nicht-ferromagnetischen Vergussmasse ausgegossen. Unter nicht-ferromagnetisch wird hier insbesondere nicht-weichmagnetisch verstanden. Insbesondere weist die Vergussmasse eine Permeabilitätszahl auf, die kleiner als 100 ist.

Der Rotor und das Blechpaket weisen Querschnittsebenen auf, die senkrecht zur axialen Richtung verlaufen. Die Querschnittsebenen erstrecken sich überwiegend in radialen Richtungen, die senkrecht zur axialen Richtung verlaufen. Eine Drehachse des Rotors für einen Betrieb einer erfindungsgemäßen elektrischen Maschine oder erfindungsgemäßen Kraftfahrzeug verläuft in der axialen Richtung. Die ersten Blechbereiche der Schichten liegen in axialer Richtung im Wesentlichen übereinander. Im Wesentlichen heißt z.B., dass die hineinragenden Stege nicht betrachtet werden und gegebenenfalls die Blechbereiche von in axialer Richtung aufeinanderfolgenden Schichten und damit auch deren erste Blechbereiche aufgrund einer Schrägung des Blechpakets zur Unterdrückung von Rastmomenten zueinander um einen Schrägungswinkel der Schrägung verschoben sind.

Bei einem erfindungsgemäßen Rotor kann zu jeder mit der nicht-ferromagnetischen Vergussmasse ausgegossenen Flussleitsperre eine mit der nicht-ferromagnetischen Vergussmasse ausgegossene Flussleitsperre punktsymmetrisch zu der Drehachse des Rotors vorhanden sein, wobei in diesen Flussleitsperren hineinragende Stege vorhanden sind. So kann vorteilhaft kostengünstig in einer hohen Qualität ein erfindungsgemäßer Rotor mechanisch stabilisiert sein, indem ein erfindungsgemäßes mechanisches Stabilisieren eine geringe Unwucht bei einem Drehen des Rotors um die Drehachse in einem Betrieb einer erfindungsgemäßen elektrischen Maschine oder erfindungsgemäßen Kraftfahrzeug hervorruft. Hierbei sind die Flussleitsperren mit den hineinragenden Stegen in den Querschnittsebenen im Wesentlichen punktsymmetrisch zu dem jeweiligen Schnittpunkt einer Querschnittsebene mit der Drehachse.

Die Blechbereiche können in einer Querschnittsebene senkrecht zur axialen Richtung aus einem weichmagnetischen Werkstoff bestehen, insbesondere aus Elektroblechen hergestellt sein. So kann vorteilhaft kostengünstig in einer hohen Qualität eine elektrische Maschine zur Verfügung gestellt werden, indem geringe Ummagnetisierungsverluste bei einem wechselnden magnetischen Fluss durch den weichmagnetischen Werkstoff im Betrieb der elektrischen Maschine auftreten.

Eine erfindungsgemäße elektrische Maschine weist den weiteren Vorteil auf, dass sie in einem erfindungsgemäßen Rotor in einer hohen Qualität kostengünstig für eine Verwendung bei hohen Drehzahlen zur Verfügung gestellt werden kann. Ein erfindungsgemäßer Rotor kann durch die in die Vergussmasse hineinragenden Stege, die zumindest teilweise in mindestens einer Richtung verlaufen, die eine Komponente in axialer Richtung aufweisen, vorteilhaft für Verwendungen bei Applikationen mit hohen Drehzahlen platzsparend mechanisch stabilisiert werden. Weiterhin kann eine erfindungsgemäße elektrische Maschine mit einem erfindungsgemäßen Rotor in hoher Qualität, insbesondere mit einem hohen Wirkungsgrad, kostengünstig für Applikationen eingesetzt werden, die hohe Drehzahlen erfordern, wie z.B. bei Lüfterantrieben oder Kompressorantrieben ohne Getriebe.

Ein erfindungsgemäßes Kraftfahrzeug weist den weiteren Vorteil auf, dass ein erfindungsgemäßer Rotor für ein erfindungsgemäßes Kraftfahrzeug in einer hohen Qualität in einer kleinen Abmessung hergestellt werden kann. Der Rotor des erfindungsgemäßen Kraftfahrzeugs kann durch die in die Vergussmasse erfindungsgemäß hineinragenden Stege vorteilhaft für hohe Drehzahlen platzsparend mechanisch stabilisiert werden, um bei kleinen Abmessungen, insbesondere auch bei einem geringem Gewicht, eine hohe Leistung, insbesondere als Antriebsmotor für das erfindungsgemäße Kraftfahrzeug, zur Verfügung zu stellen. Weiterhin vorteilhaft kann ein erfindungsgemäßer Rotor vorteilhaft kostengünstig in einer hohen Qualität einen Gesamtverbund mit einer Welle, an der der Rolle befestigt ist, bilden, bei der eine Biege-Eigenfrequenz eines erfindungsgemäßen Rotors mit der Welle in einem Betrieb des Kraftfahrzeugs geringe Auslenkungen in einer Richtung senkrecht zu der axialen Richtung erfährt. So kann bei einem erfindungsgemäßen Kraftfahrzeug der Luftspalt zwischen dem Rotor und dem Stator vorteilhaft eine geringe Breite aufweisen, die einen höheren Wirkungsgrad vorteilhaft ermöglicht. Ein erfindungsgemäßes Kraftfahrzeug kann eine erfindungsgemäße elektrische Maschine mit einem erfindungsgemäßen Rotor, insbesondere als Antriebsmotor des Kraftfahrzeugs, aufweisen oder es kann vorteilhaft platzsparend der Stator, der in einem Betrieb des Kraftfahrzeugs über einen Luftspalt mit dem Rotor magnetisch zusammenwirkt, mit einer Befestigungsvorrichtung an dem Kraftfahrzeug befestigt sein, wobei der Rotor um eine Drehachse drehbar gelagert ist, wobei die Drehachse in der axialen Richtung verläuft. So kann vorteilhaft platzsparend eine Hülle, die zumindest einen Teilbereich des Kraftfahrzeuges umgibt, den Stator und ein erfindungsgemäßen Rotor aufnehmen.

Ein erfindungsgemäßes Blechpaket weist den weiteren Vorteil auf, dass die mit einer Komponente in axialer Richtung hineinragenden Stege vorteilhaft kostengünstig durch Verformen von überstehenden Stegen an den befestigten Blechbereichen hergestellt werden können.

Ein erfindungsgemäßes Blechpaket kann vorteilhaft durch eine Fixiervorrichtung zusammengehalten werden, um dies kostengünstig transportieren und/oder lagern zu können. Die Fixiervorrichtung kann mindestens ein Fixierelement aufweisen, das sich in mindestens einer Flussleitsperre von dem ersten axialen Ende zu dem zweiten axialen Ende erstreckt. So kann das Blechpaket vorteilhaft kostengünstig in einer hohen Qualität bei einem Transport gegen Auseinanderfallen und Verdrehen der Schichten gesichert werden.

Ein erfindungsgemäßes Verfahren zur Herstellung eines erfindungsgemäßen Rotors weist den weiteren Vorteil auf, dass der Rotor vorteilhaft kostengünstig in einer hohen Qualität als eine Einheit zur Verfügung gestellt werden kann. Ein erfindungsgemäßer Rotor kann nach dem Vergießen vorteilhaft als eine mechanisch stabile Einheit weiterverarbeitet werden. Bei der Weiterverarbeitung kann so z.B. eine kostengünstige Nachbearbeitung des Rotors durchgeführt werden, damit dieser vorteilhaft in einer hohen Qualität zur Verfügung gestellt werden kann.

Eine erfindungsgemäße Verwendung von Blechen für einen erfindungsgemäßen Rotor weist den weiteren Vorteil auf, dass durch die Verwendung von Blechen die erfindungsgemäß hineinragenden Stege vorteilhaft kostengünstig in einer hohen Qualität aus Blechüberständen an den Rändern der befestigten Blechbereiche zu den Flussleitsperren hin hergestellt werden können. Unter anderem müssen nicht unbedingt komplizierte, z.B. schwalbenschwanzförmige, Ausstanzungen an den Rändern der Bleche vorgenommen werden. Vielmehr können die Bereiche der Flussleitsperren ausgestanzt werden und dabei vorteilhaft Blechüberstände an den Rändern entstehen.

Bei einer erfindungsgemäßen Verwendung der Bleche können vorteilhaft kostengünstig in einer hohen Qualität die Schichten des Blechpakets mit befestigten Blechbereichen hergestellt werden, die jeweils mindestens einen hineinragenden Steg aufweisen, wobei dieser zumindest teilweise in mindestens einer Richtung verläuft, die eine Komponente in axialer Richtung aufweist. Vorteilhaft können in einem weiteren Schritt die Schichten mit den Blechbereichen zu einem Blechpaket geschichtet werden und dabei Freiräume der mindestens einen Flussleitsperre für die Vergussmasse gebildet werden, in die die Stege hineinragen.

Vorteilhafte Ausgestaltungen der Erfindung sind in den abhängigen Ansprüchen angegeben.

So ist eine Ausgestaltung eines erfindungsgemäßen Rotors für eine elektrische Maschine vorteilhaft, bei der eine Schicht eine benachbarte Schicht aufweist, in der mindestens ein erster Blechbereich vorhanden ist, der einen benachbarten hineinragenden Steg aufweist, wobei der benachbarte hineinragende Steg in einer Drehrichtung nach einem ersten hineinragenden Steg des ersten Blechbereichs der Schicht in der Vergussmasse benachbart verläuft. So können vorteilhaft kostengünstig in einer hohen Qualität die Formschlüsse zwischen den hineinragenden Stegen und der Vergussmasse vorhanden sein. Es können so vorteilhaft kostengünstig in einer hohen Qualität die Schichten in axialer Richtung, gegen ein Verschieben in einer Querschnittsebene und ein Verdrehen in einer Drehrichtung mechanisch stabilisiert werden. Es wird das Verdrehen in der Drehrichtung um eine in axialer Richtung verlaufende Drehachse vorteilhaft vermieden, indem der benachbarte hineinragende Steg nach dem ersten hineinragenden Steg benachbart verläuft, da zwischen dem benachbarten hineinragenden Steg und dem ersten hineinragenden Steg nur ein geringes Volumen an Vergussmasse vorhanden ist, die z.B. durch einwirkende Drehmomente im Betrieb einer erfindungsgemäßen elektrischen Maschine oder einem erfindungsgemäßen Kraftfahrzeug eine Verformung erfahren kann, wobei die Verformung des geringeren Volumens der Vergussmasse über eine geringere Strecke erfolgt. Wenn für die Vergussmasse ein Material verwendet wird, bei dem höhere Kräfte für die Verformung notwendig sind, so kann ein Abstand zwischen dem benachbarten hineinragenden Steg und dem ersten hineinragenden Steg größer gewählt werden, d.h. das geringere Volumen kann größer ausfallen, um die gleiche geringe Strecke bei der Verformung im Betrieb einer erfindungsgemäßen elektrischen Maschine oder einem erfindungsgemäßen Kraftfahrzeug zu erreichen.

In einer weiteren vorteilhaften Ausgestaltung eines erfindungsgemäßen Rotors für eine elektrische Maschine ist in jeder Schicht ein zweiter Blechbereich ein befestigter Blechbereich, wobei ein hineinragender Steg des ersten Blechbereichs als ein gegenüberliegender hineinragender Steg von einem ersten hineinragenden Steg des zweiten Blechbereichs durch die Vergussmasse getrennt ist. So kann vorteilhaft kostengünstig in einer hohen Qualität bei einem erfindungsgemäßen Rotor der erste und der zweite Blechbereich gegen ein Verschieben sowohl in axialer Richtung als auch in einer Querschnittsebene vorteilhaft mechanisch stabilisiert werden. So können Abmessungen der Flussleitsperren auch unter Einwirkung hoher Kräfte im Betrieb der elektrischen Maschine, z.B. durch hohe Drehzahlen des Rotors, vorteilhaft aufrechterhalten werden, um vorteilhaft geringe Veränderungen der elektromagnetischen Eigenschaften eines erfindungsgemäßen Rotors zu erreichen.

Vorteilhaft können durch die Komponenten in axialer Richtung des ersten hineinragenden Stegs und des gegenüberliegenden hineinragenden Stegs vergrößerte Grenzflächen zwischen den Stegen und der Vergussmasse vorhanden sein und trotzdem eine Trennung zwischen dem gegenüberliegenden hineinragenden Steg und dem ersten hineinragenden Steg durch die Vergussmasse vorhanden sein. Weiterhin vorteilhaft kostengünstig kann so ein mechanisches Stabilisieren des ersten und des zweiten Blechbereichs gegen ein Verzerren einer Schicht, insbesondere an einer Flussleitsperre, in einer hohen Qualität vorteilhaft ermöglicht werden, wobei sich die Flussleitsperre zwischen dem ersten und dem zweiten Blechbereich von dem ersten axialen Ende zu dem zweiten axialen Ende des Blechpakets erstreckt. Analog zu den ersten Blechbereichen, liegen auch die zweiten Blechbereiche der Schichten in axialer Richtung im Wesentlichen übereinander. So kann auch vorteilhaft eine Berührung der einzelnen befestigten Blechbereiche, insbesondere ein niederohmiger Kurzschluss zwischen den befestigten Blechbereichen einer Schicht, bei geringem Abstand der Stege vorteilhaft vermieden werden. Vorteilhaft kostengünstig kann in einer hohen Qualität auch bei einem erfindungsgemäßen Verfahren zur Herstellung eines erfindungsgemäßen Rotors die vorteilhafte Trennung der Stege durch die Vergussmasse eingehalten werden. Vorteilhaft kostengünstig kann so eine hohe Qualität bei einem erfindungsgemäßen Verfahren zur Herstellung über eine große Stückzahl an hergestellten Rotoren ermöglicht werden.
In einer weiteren vorteilhaften Ausgestaltung eines erfindungsgemäßen Rotors für eine elektrische Maschine ist der erste hineinragende Steg des ersten Blechbereichs der Schicht der gegenüberliegende hineinragende Steg. So kann vorteilhaft kostengünstig in einer hohen Qualität ein mechanisches Stabilisieren eines erfindungsgemäßen Rotors an dem ersten und dem zweiten Blechbereich in axialer Richtung und gegen ein Verschieben in einer Querschnittsebene erfolgen. So können vorteilhaft die Abmessungen der Flussleitsperren auch unter Einwirkung hoher Kräfte in einem Betrieb der elektrischen Maschine, z.B. durch eine hohe Drehzahl eines erfindungsgemäßen Rotors um die Drehachse, vorteilhaft und kostengünstig in einer hohen Qualität durch die ersten hineinragenden Stege vorteilhaft aufrechterhalten werden.

In dem erfindungsgemäßen Rotor für eine elektrische Maschine ragt zwischen einer Schicht und einer zu der Schicht benachbarten Schicht in die Vergussmasse der Flussleitsperren kein hineinragender Steg hinein, der in der axialen Richtung über einen hineinragenden Steg der Schicht liegt. So können vorteilhaft kostengünstig in einer hohen Qualität die Formschlüsse zwischen den hineinragenden Stegen und der Vergussmasse vorhanden sein, indem die Vergussmasse in den Freiräumen um einen hineinragenden Steg vorhanden sein kann.
Damit zwischen der Schicht und der zu der Schicht benachbarten Schicht in die Vergussmasse der Flussleitsperren kein hineinragender Steg hineinragt, können zwischen der Schicht und der benachbarten Schicht benachbarte Schichten vorhanden sein. Benachbarte Schichten haben vorteilhaft keine hineinragenden Stege die in der axialen Richtung über einen hineinragenden Steg der Schicht liegen. Mehrere benachbarte Schichten ermöglichen vorteilhaft kostengünstig in einer hohen Qualität das Ausgießen der Freiräume der Flussleitsperren, insbesondere zwischen den in der axialen Richtung übereinander liegenden hineinragenden Stege, wenn die Vergussmasse eine solche Viskosität aufweist, dass diese nur sehr schwierig in einen Freiraum mit der Breite einer Schichtdicke einer benachbarten Schicht beim Ausgießen eindringen kann.

In einer weiteren vorteilhaften Ausgestaltung eines erfindungsgemäßen Rotors für eine elektrische Maschine ist in der benachbarten Schicht ein dritter Blechbereich vorhanden, der einen benachbarten hineinragenden Steg aufweist, wobei der benachbarte hineinragende Steg entgegen der Drehrichtung nach einem ersten hineinragenden Steg eines dritten Blechbereichs der Schicht in der Vergussmasse benachbart verläuft. So können vorteilhaft kostengünstig in einer hohen Qualität die Formschlüsse zwischen den hineinragenden Stegen und der Vergussmasse vorhanden sein. Es können so vorteilhaft kostengünstig in einer hohen Qualität die Schichten in axialer Richtung, gegen ein Verschieben in einer Querschnittsebene und gegen ein Verdrehen in einer Querschnittsebene entgegen der Drehrichtung und, in vorteilhafter Kombination mit einer bereits beschriebenen Ausgestaltung, auch in der Drehrichtung mechanisch stabilisiert werden. Es wird das Verdrehen vorteilhaft vermieden, indem der benachbarte hineinragende Steg neben dem ersten hineinragenden Steg verläuft, da zwischen dem benachbarten hineinragenden Steg und dem ersten hineinragenden Steg nur ein geringes Volumen an Vergussmasse vorhanden ist.

In einer weiteren vorteilhaften Ausgestaltung eines erfindungsgemäßen Rotors für eine elektrische Maschine ist der mindestens eine hineinragende Steg eines befestigten Blechbereichs durch ein Verbiegen eines Teilbereichs eines Blechstücks entstanden, wobei das Blechstück den befestigten Blechbereich umfasst. So kann vorteilhaft kostengünstig in einer hohen Qualität der mindestens eine hineinragende Steg aus dem Blechstück hergestellt werden.

In einer weiteren vorteilhaften Ausgestaltung eines erfindungsgemäßen Rotors für eine elektrische Maschine bestehen in jeder Schicht die Blechbereiche aus einem Blech. So kann vorteilhaft kostengünstig in einer hohen Qualität ein erfindungsgemäßes Blechpaket bzw. Rotor überwiegend aus Blechen hergestellt werden.

In einer weiteren vorteilhaften Ausgestaltung eines erfindungsgemäßen Rotors für eine elektrische Maschine weisen die befestigten Blechbereiche Berandungen auf, die jeweils mindestens einen hineinragenden Steg aufweisen, wobei sich jede Schicht in Bezug auf diese Berandungen aus einer benachbarten Schicht durch Verdrehen der benachbarten Schicht um einen Verdrehwinkel ergibt, wobei in jeder Schicht mindestens ein hineinragender Steg unsymmetrisch zu mindestens einem ersten hineinragenden Steg bezüglich einer Symmetrieachse angeordnet ist, wobei die Symmetrieachse eine Winkelhalbierende zu dem Verdrehwinkel ist. So kann vorteilhaft kostengünstig und in einer hohen Qualität ein erfindungsgemäßer Rotor gegen auftretende Kräfte in axialer Richtung und radialen Richtungen mechanisch stabilisiert werden, wobei die Kräfte insbesondere bei einem Betrieb einer erfindungsgemäßen elektrischen Maschine oder eines erfindungsgemäßen Kraftfahrzeugs mit dem erfindungsgemäßen Rotor auftreten. Dies wird vorteilhaft erreicht, indem die hineinragenden Stege in verschiedenen radialen Richtungen bei einem erfindungsgemäßen Rotor vorhanden sind und gleichzeitig die hineinragenden Stege in die Vergussmasse hineinragen. Das Hineinragen der Stege wird hierbei vorteilhaft dadurch erreicht, dass die hineinragenden Stege durch den Verdrehwinkel in zwei benachbarten Schichten nicht in axialer Richtung übereinander liegen. Ein erfindungsgemäßes Verfahren zur Herstellung eines erfindungsgemäßen Rotors oder eine erfindungsgemäße Verwendung von Blechen für einen erfindungsgemäßen Rotor kann so vorteilhaft kostengünstig in einer hohen Qualität ein mechanisches Stabilisieren des Rotors erfolgen, indem benachbarte Schichten verdreht um den Verdrehwinkel aufeinander geschichtet werden.

Der mindestens eine hineinragende Steg, der unsymmetrisch zu mindestens einem ersten hineinragenden Steg bezüglich der Symmetrieachse angeordnet ist, kann mindestens ein benachbarter hineinragender Steg sein. So kann vorteilhaft, kostengünstig und in einer hohen Qualität ein mechanisches Stabilisieren der Schichten eines erfindungsgemäßen Rotors in axialer Richtung, gegen ein Verschieben in einer Querschnittsebene und gegen ein Verdrehen in einer Querschnittsebene in der Drehrichtung erfolgen.

Die Berandungen der befestigten Blechbereiche sind zwischen einem ersten Kreisradius und einem zweiten Kreisradius achsensymmetrisch zu der Symmetrieachse. So kann ein mechanisches Stabilisieren eines magnetischen Poles, insbesondere eine Anordnung mehrerer magnetischer Polbereiche der magnetischen Polen, eines erfindungsgemäßen Rotors vorteilhaft kostengünstig in einer hohen Qualität in verschiedenen radialen Richtungen der Anordnung in vorteilhaft gleichem Maße erfolgen.

Der mindestens eine hineinragende Steg kann einen Abstand von dem ersten Kreisradius aufweisen, der geringer ist als ein Abstand des mindestens einen ersten hineinragenden Stegs von dem zweiten Kreisradius, wobei der Verdrehwinkel von dem ersten Kreisradius zu dem zweiten Kreisradius gemessen ist, wobei der mindestens eine hineinragende Steg in der Drehrichtung vor dem ersten Kreisradius vorhanden ist und der mindestens eine erste hineinragende Steg in der Drehrichtung vor dem zweiten Kreisradius vorhanden ist. So können vorteilhaft kostengünstig in einer hohen Qualität die Schichten in axialer Richtung gegen ein Verschieben einer Querschnittsebene und ein Verdrehen in einer Drehrichtung mechanisch stabilisiert werden, indem sich die Abstände von dem ersten bzw. zweiten Kreisradius vorteilhaft einfach unterscheiden.

Ein weiterer hineinragender Steg, der unsymmetrisch zu einem weiteren ersten hineinragenden Steg bezüglich der Symmetrieachse angeordnet ist, kann einen Abstand von dem ersten Kreisradius aufweisen, der geringer ist als ein Abstand des weiteren ersten hineinragenden Stegs von dem zweiten Kreisradius, wobei der Drehwinkel von dem ersten Kreisradius zu dem zweiten Kreisradius gemessen ist, wobei der weitere hineinragende Steg in der Drehrichtung nach dem ersten Kreisradius vorhanden ist und der weitere erste hineinragende Steg in der Drehrichtung nach dem zweiten Kreisradius vorhanden ist. So kann vorteilhaft kostengünstig und in hoher Qualität ein mechanisches Stabilisieren der Schichten eines erfindungsgemäßen Rotors in axialer Richtung, gegen ein Verschieben einer Querschnittsebene und gegen ein Verdrehen in einer Querschnittsebene in und entgegen der Drehrichtung erfolgen, indem sich die Abstände von dem ersten bzw. zweiten Kreisradius vorteilhaft einfach unterscheiden.

Der Verdrehwinkel kann 90° betragen. So kann kostengünstig in einer hohen Qualität ein erfindungsgemäßes Blechpaket oder Rotor hergestellt werden, da ein Verdrehen um 90° bei einem Aufeinanderschichten benachbarter Schichten ein vorteilhaft einfacher Verfahrensschritt ist.

In einer weiteren vorteilhaften Ausgestaltung eines erfindungsgemäßen Rotors für eine elektrische Maschine weist der Rotor eine weitere Schicht auf, die in der axialen Richtung die geschichteten Schichten an dem zweiten axialen Ende des Blechpakets fortsetzt, wobei die weitere Schicht höchstens Blechbereiche aufweist, die keine hineinragenden Stege aufweisen. So kann vorteilhaft kostengünstig die weitere Schicht in einer hohen Qualität ein axiales Ende des Blechpakets fortsetzen, wobei eine Oberfläche des Rotors an dem zweiten axialen Ende des Blechpakets ohne in axialer Richtung hervorstehende Stege vorhanden ist. Dies trägt dazu bei, dass ein erfindungsgemäßer Rotor vorteilhaft kostengünstig in hoher Qualität hergestellt oder verwendet werden kann, da nicht auf hervorstehende Stege an dem axialen Ende geachtet werden muss.

Der Rotor kann in der axialen Richtung vor den geschichteten Schichten eine Schicht mit Vergussmasse aufweisen, die stoffschlüssig mit der Vergussmasse in den Flussleitsperren verbunden ist, wobei die weitere Schicht ebenfalls die Vergussmasse aufweist, die an dem zweiten axialen Ende des Blechpakets mit der Vergussmasse der Flussleitsperren stoffschlüssig verbunden ist. So können vorteilhaft kostengünstig in einer hohen Qualität an dem ersten und dem zweiten Ende des Blechpakets beim Ausgießen der Flussleitsperren mit der Vergussmasse Stützelemente hergestellt werden. Zusätzlich kann vorteilhaft die Vergussmasse aus einem elektrisch leitfähigen Material, insbesondere einem Metall, bestehen, wobei die Vergussmasse eine Einrichtung des Rotors bildet, die zur Bildung der magnetischen Pole eines erfindungsgemäßen Rotors in einem Betrieb einer erfindungsgemäßen elektrischen Maschine beiträgt. So kann vorteilhaft kostengünstig in einer hohen Qualität eine erfindungsgemäße mechanische Stabilität erreicht werden und gleichzeitig eine Einrichtung des Rotors zur Verfügung gestellt werden, die teilweise für einen Betrieb einer erfindungsgemäßen elektrischen Maschine genutzt werden kann, z.B. beim Anlauf als Anlaufhilfe der elektrischen Maschine oder auch für einen Betrieb der elektrischen Maschine nach dem Anlauf.

Eine weitere vorteilhafte Ausgestaltung eines erfindungsgemäßen Rotors für eine elektrische Maschine weist jeweils eine Schicht mit befestigten Blechbereichen aneinander grenzende Kreissektoren auf, die jeweils durch zwei d-Kreisradien begrenzt sind, wobei in jeder Schicht mit befestigten Blechbereichen durch die Blechbereiche mehrere gebogene, streifenförmige und jeweils durch die Flussleitsperren voneinander getrennte Flussleitabschnitte gebildet sind, die sich jeweils in ihrer Längserstreckung quer zu einer q-Achse des Rotors erstrecken, wobei die q-Achse entlang einer Winkelhalbierenden der zwei d-Kreisradien verläuft. So kann vorteilhaft kostengünstig in hoher Qualität eine Anisotropie der magnetischen Leitfähigkeit eines erfindungsgemäßen Rotors für einen Betrieb einer erfindungsgemäßen elektrischen Maschine zur Verfügung gestellt werden. Die zwei d-Kreisradien verlaufen jeweils entlang einer d-Achse des Rotors.

Die Blechbereiche können durch die Flussleitsperren in jeder Schicht vollständig voneinander getrennt sein. Durch ein erfindungsgemäßes mechanisches Stabilisieren eines erfindungsgemäßen Rotors kann vorteilhaft kostengünstig in einer hohen Qualität vorteilhaft auf einen Außenring für ein Zusammenhalten der Blechbereiche des Rotors bei einem Betrieb der elektrischen Maschine verzichtet werden oder dieser zumindest eine geringere Breite aufweisen. Da der Außenring in der elektrischen Maschine in radialen Richtungen in einem geringen Abstand oder direkt entlang des Luftspaltes verläuft, vergrößert er den Abstand der magnetischen Pole des Rotors von den magnetischen Polen des Stators, was große Abmessungen oder geringe Wirkungsgrade der elektrischen Maschine zur Folge hat. Weiterhin kann der Beitrag des Außenrings zur Bildung der magnetischen Pole des Rotors gering sein oder verringert sogar deren Wirkung in einem Betrieb einer elektrischen Maschine. Bei einem erfindungsgemäßen Verfahren zur Herstellung eines erfindungsgemäßen Rotors kann nach dem Ausgießen der Flussleitsperren vorteilhaft kostengünstig in einer hohen Qualität der Außenring entfernt werden, insbesondere durch spanende Bearbeitungsverfahren. Durch ein erfindungsgemäßes mechanisches Stabilisieren kann ein erfindungsgemäßer Rotor hierbei vorteilhaft kostengünstig in einer hohen Qualität als eine mechanisch stabile Einheit bearbeitet werden.

Vorteilhafte Ausgestaltungen erfindungsgemäßer Rotoren, elektrischer Maschinen, Kraftfahrzeuge, Blechpakete sowie Verfahren zur Herstellung eines erfindungsgemäßen Rotors und eine erfindungsgenmäße Verwendung von Blechen für einen solchen Rotor ergeben sich vorteilhaft durch Kombination einiger oder mehrerer beschriebener Merkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein Ausführungsbeispiel eines Rotors,
- FIG 2: ein Ausführungsbeispiel eines Blechpakets,
- FIG 3: ein Ausführungsbeispiel eines in den FIG 1 und FIG 2 als benachbarte Schicht in der Orientierung gemäß FIG 3 verwendeten Blechs,
- FIG 4: ein Ausführungsbeispiel eines in den FIG 1 und FIG 2 als Schicht in der Orientierung gemäß FIG 4 verwendeten Blechs,
- FIG 5: ein Ausführungsbeispiel einer elektrischen Maschine,
- FIG 6: ein Ausführungsbeispiel eines Kraftfahrzeugs,
- FIG 7: ein Ausführungsbeispiel eines als eine weitere benachbarte Schicht bezeichneten Blechs für ein drittes Ausführungsbeispiel eines Rotors.

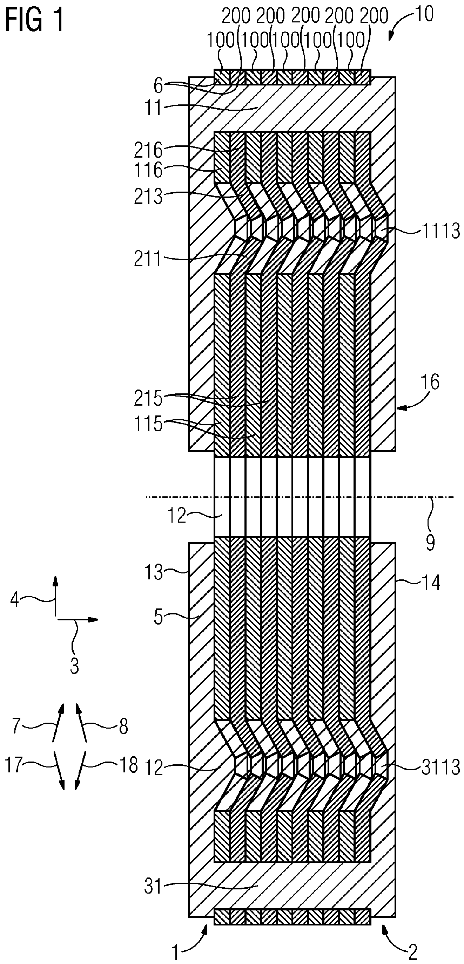

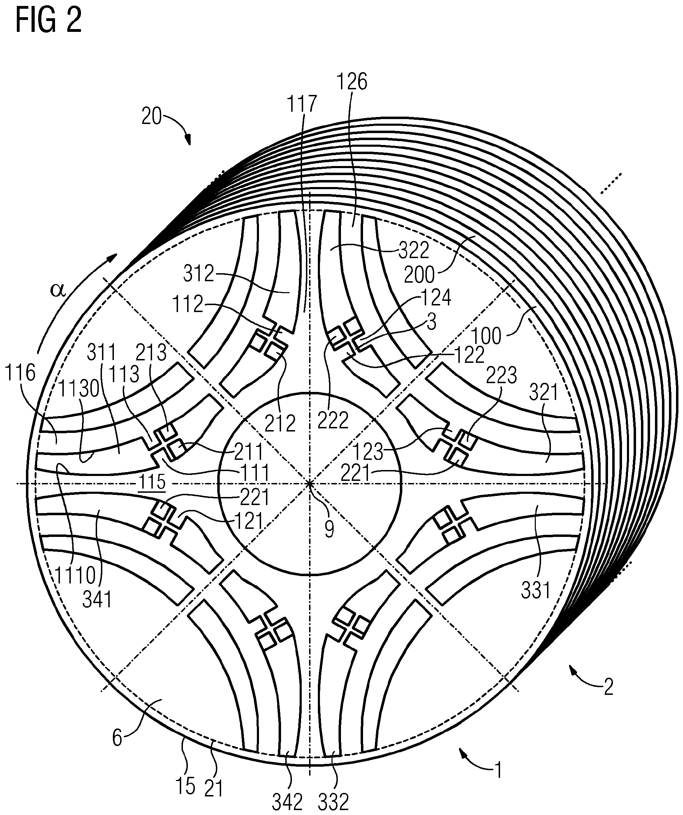

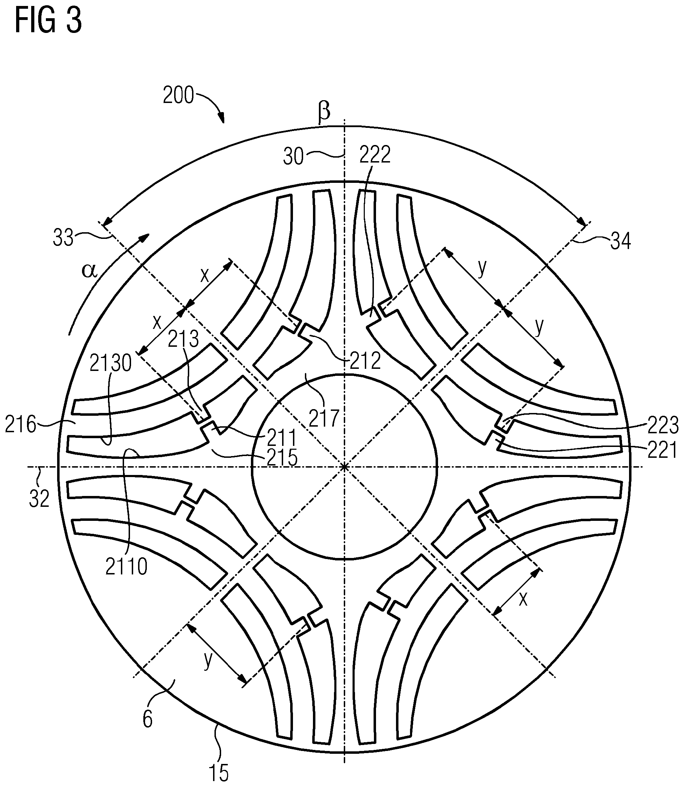

FIG 1 zeigt ein Ausführungsbeispiel eines Rotors 10. Für eine elektrische Maschine 50, wobei der Rotor 10 ein Blechpaket 20 umfasst, das in einer axialen Richtung 3 geschichtete Schichten 100,200 aufweist. Das Blechpaket 20 erstreckt sich in der axialen Richtung 3 von einem ersten axialen Ende 1 zu einem zweiten axialen Ende 2, wobei jede Schicht 100,200 mehrere Blechbereiche 115,116,215,216 aufweist. Zur Erklärung des Aufbaus des Ausführungsbeispiels werden die Schichten 100,200 wechselweise als Schicht 100 und als benachbarte Schicht 200 bezeichnet, obwohl diese in dem Ausführungsbeispiel aus identisch ausgeführten Bleche 15 hergestellt sind (siehe FIG 2, FIG 3). Jedoch sind die Schichten 100,200 wechselweise verdreht um einen Verdrehwinkel β in der Lage gemäß der FIG 2 und FIG 3 aufeinander geschichtet. Die Bleche 15 sind aus einem Elektroblech hergestellt, das eine Dicke aufweist, die kleiner als 1 mm, typischerweise 0,5 mm oder 0,35 mm, ist. Jede Schicht 100,200 weist mehrere Blechbereiche 6,16,115, 116,215,216 auf, wobei Flussleitsperren 11,31,1113,3113 vorhanden sind, die zwischen angrenzenden Blechbereichen (6,115, 116,215,216) liegen. Die angrenzenden Blechbereichen (6,115, 116,215,216) sind Blechbereiche, die an den Flussleitsperren 11,31,1113,3113 angrenzen. Die Vergussmasse 5 erstreckt sich in den Flussleitsperren 11,31,1113,3113 jeweils von dem ersten axialen Ende 1 zu dem zweiten axialen Ende 2. In jeder Schicht 100,200 ist mindestens ein erster Blechbereich 115,215 ein befestigter Blechbereich 115,215. Die befestigten Blechbereiche 115,116,215,216 weisen jeweils mindestens einen in die Vergussmasse 5 hineinragenden Steg 111,113,211,213 auf, wobei die hineinragenden Stege 111,113,211,213 zumindest in mindestens einer Richtung 7,8,17,18 verlaufen, die eine Komponente in axialer Richtung 3 aufweisen. Die hineinragenden Stege 111,113 der Schichten 100 sind in dem Längsschnitt der FIG 1 durch die Vergussmasse 5 verdeckt. Die hineinragenden Stege 211,213 eines befestigten Blechbereichs 215,216 sind durch ein Verbiegen eines Teilbereichs eines Blechstücks entstanden, wobei das Blechstück den befestigten Blechbereich 215,216 umfasst. In dem Ausführungsbeispiel der FIG 1 sind die hineinragenden Stege 211,213 gegenüber dem befestigten Blechbereich 215,216 im Wesentlichen als Ganzes um ca. 45° abgewinkelt worden. Der Rotor 10 weist eine weitere Schicht 14 auf, die in der axialen Richtung 3 die geschichteten Schichten 100,200 an dem zweiten axialen Ende 2 des Blechpakets fortsetzt, wobei die weitere Schicht 14 höchstens Blechbereiche aufweist, die keine hineinragenden Stege 211,213 aufweist. Eine Oberfläche 16 des Rotors 10 wird so an dem zweiten axialen Ende 2 des Blechpakets durch die weitere Schicht 14 fortgesetzt, wobei die Oberfläche 16 des Rotors 10 an dem zweiten axialen Ende 2 des Blechpakets ohne in axialer Richtung 3 hervorstehende Stege 211,213 vorhanden ist. Der Rotor 10 weist in der axialen Richtung 3 vor den geschichteten Schichten 100,200 eine Schicht 13 mit Vergussmasse 5 auf, die stoffschlüssig mit der Vergussmasse 5 in den Flussleitsperren 11,31,1113,3113 verbunden ist, wobei die weitere Schicht 14 ebenfalls die Vergussmasse 5 aufweist, die an dem zweiten axialen Ende 2 des Blechpakets mit der Vergussmasse 5 der Flussleitsperren 11,31,1113,3113 stoffschlüssig verbunden ist. Die Schicht 13 mit der Vergussmasse 5 und die weitere Schicht 14 mit der Vergussmasse 5 können aus einem Kunstharz als Vergussmasse 5 hergestellt werden. Die Vergussmasse 5 kann aber auch aus einem elektrisch leitfähigen Material bestehen, wobei sie dann eine Einrichtung des Rotors 10 bildet, die zur Bildung der magnetischen Pole im Betrieb einer elektrischen Maschine 50 beitragen. Die Einrichtung des Rotors ist in dem Ausführungsbeispiel der FIG 1 eine Kurzschlusswicklung, die hauptsächlich als Anlaufhilfe einer elektrischen Maschine 50 mit dem Rotor 10 beim Betrieb der elektrischen Maschine 50 verwendet wird. Als elektrisch leitfähiges Material wird ein Metall verwendet. Bei dem Ausführungsbeispiel der FIG 1 wird Aluminium verwendet, das bei einem Verfahren zur Herstellung des Rotors 10 mit einem Druckgussverfahren an dem Rotor 10 angebracht werden kann. Der Rotor 10 weist eine Drehachse 9 auf, die in axialer Richtung 3 verläuft. Das Blechpaket weist einen Durchgang 12 zur Aufnahme einer Welle 51 auf. Die Schichten 100,200 weisen für den Durchgang 12 kreisförmige Ausstanzungen auf. Der Rotor 10 und das Blechpaket weisen Querschnittsebenen auf, die senkrecht zur axialen Richtung 3 verlaufen. Die Querschnittsebenen erstrecken sich überwiegend in radialen Richtungen 4, die senkrecht zur axialen Richtung 3 verlaufen. Der Rotor 10 erstreckt sich ausgehend von der Drehachse 9 im Wesentlichen in allen radialen Richtungen 4 in derselben Breite. In FIG 1 ist nur eine der radialen Richtungen als Pfeil 4 eingezeichnet.

FIG 2 zeigt ein Ausführungsbeispiel eines Blechpakets 20 für einen Rotor 10, wobei das Blechpaket 20 in der axialen Richtung 3 geschichtete Schichten 100,200 aufweist. Jede Schicht 100,200 weist mehrere Blechbereiche 6,115,116,117,126 auf, wobei Flussleitsperren vorhanden sind, die zwischen angrenzenden Blechbereichen 6,115,116,117,126 liegen. Das Blechpaket 20 erstreckt sich in der axialen Richtung 3 von dem ersten axialen Ende 1 zum zweiten axialen Ende 2. Es sind als befestigte Blechbereiche 116,117,126 bezeichnete Blechbereiche vorhanden, die jeweils mindestens einen hineinragenden Steg 111,112,113,121,122,124 aufweisen, wobei die hineinragenden Stege zumindest teilweise in mindestens einer Richtung 7,8,17,18 verlaufen, die eine Komponente in der axialen Richtung 3 aufweisen. Die hineinragenden Stege ragen in Freiräume 311,332 der Flussleitsperren 1113,3113 für die Vergussmasse 5 hinein. In jeder Schicht 100,200 ist mindestens ein erster Blechbereich 115,215 ein befestigter Blechbereich. Der erste Blechbereich 215 der Schicht 200 ist in FIG 3 zu sehen. Die ersten Blechbereiche 115,215 der Schichten 100,200 liegen in axialer Richtung 3 im Wesentlichen übereinander. In den Ausführungsbeispielen der FIG 1 und der FIG 2 überlappen sich die ersten Blechbereiche 115,215 der Schichten 100,200, abgesehen von den hineinragenden Stegen 111,211 vollständig.

Bei einem Ausführungsbeispiel eines Verfahrens zur Herstellung eines zweiten Ausführungsbeispiels eines Rotors wird das Blechpaket 20 gemäß der FIG 2 bereitgestellt und Freiräume 311,312,321,322,331,332,341,342 der Flussleitsperren 1113,3113 in der axialen Richtung 3 zwischen den in die Freiräume hineinragende Stege 111,112,113,121,122,124,211,212, 213,221,222 ausgegossen, wobei die hineinragenden Stege zumindest teilweise in mindestens einer Richtung 7,8,17,18 verlaufen, die eine Komponente in der axialen Richtung 3 aufweist. Bei dem Ausführungsbeispiel des Rotors 10 in FIG 1 sind alle Flussleitsperren 11,31,1113,3113 mit der Vergussmasse 5 ausgegossen. Gemäß den angeführten Bezugszeichen der Freiräume in diesem Absatz der Beschreibung sind bei dem Ausführungsbeispiel eines Verfahrens zur Herstellung des Rotors und bei dem zweiten Ausführungsbeispiels eines Rotors nur die Flussleitsperren (1113,3113) mit hineinragenden Stegen ausgegossen. Hierbei sind - wie bei dem Blechpaket 20 in FIG 2 gezeigt - nur bei den Flussleitsperren hineinragende Stege vorhanden, die sich am weitesten zur Drehachse 9 hin erstrecken (d.h. die Flussleitsperren, die den Freiräumen 311,312,321,
322,331,332,341,342 entsprechen). So ist auch in diesem Fall zu jeder mit der nicht-ferromagnetischen Vergussmasse 5 ausgegossenen Flussleitsperre eine mit der nicht-ferromagnetischen Vergussmasse 5 ausgegossene Flussleitsperre punktsymmetrisch zu der Drehachse 9 des Rotors vorhanden, wobei in diese Flussleitsperren hineinragende Stege vorhanden sind.

Bei einem zweiten Ausführungsbeispiel eines Verfahrens zur Herstellung des Rotors 10 werden zusätzlich zu dem bereits beschriebenen Ausführungsbeispiel eines Herstellungsverfahrens Freiräume der restlichen Flussleitsperren 11,31 zwischen den Blechbereichen 6,116 in der axialen Richtung 3 ausgegossen. Nach dem Ausgießen aller Flussleitsperren 11,31,1113, 3111 wird ein Außenring 21 durch ein spanendes Bearbeitungsverfahren mit einer Drehmaschine entfernt.

Die weitere Beschreibung der FIG 2 nimmt Bezug auf den Rotor des Ausführungsbeispiels der FIG 1, bei dem die Freiräume 311,312,321,322,331,332,341,342 mit der Vergussmasse 5 ausgegossen sind. Eine entsprechende Beschreibung der FIG 2 für das Blechpaket 20 ist entsprechend angepasst für Freiräume anstatt der Vergussmasse ableitbar. Eine Schicht 100 des Blechpakets 20 weist eine benachbarte Schicht 200 auf, in der der erste Blechbereich 115 vorhanden ist, der einen benachbarten hineinragenden Steg 211 aufweist, wobei der benachbarte hineinragende Steg 211 in einer Drehrichtung α nach einem ersten hineinragenden Steg 111 des ersten Blechbereichs 115 der Schicht 100 in der Vergussmasse 5 benachbart verläuft. In FIG 2 ist nur eine Querschnittsebene des Blechpakets 20 bzw. des Rotors 10 zu sehen. Würde man die anderen Querschnittsebenen des Blechpakets 20 bzw. des Rotors 10 betrachten, so wiese jede Schicht 100,200 mit einem befestigten Blechbereich 115,215 eine benachbarte Schicht 100,200 mit einem benachbarten hineinragenden Steg 211,122 auf. In jeder Schicht 100,200 des Rotors 10 ist auch ein zweiter Blechbereich 116,216 ein befestigter Blechbereich, wobei ein hineinragender Steg 111,211 des ersten Blechbereichs 115,215 als ein gegenüberliegender hineinragender Steg 111,211 von einem ersten hineinragenden Steg 113,213 des zweiten Blechbereichs 116,216 durch die Vergussmasse 5 getrennt ist. Der erste hineinragende Steg 111 des ersten Blechbereichs 115 der Schicht 100 ist der gegenüberliegende hineinragende Steg 111. In den benachbarten Schichten 200 ist ein dritter Blechbereich 217 vorhanden, der einen benachbarten hineinragenden Steg 212 aufweist, wobei dieser entgegen der Drehrichtung α nach einem ersten hineinragenden Steg 112 eines dritten Blechbereichs 117 der Schicht 100 in der Vergussmasse 5 benachbart verläuft. Bei dem Rotor 10 bzw. bei dem Blechpaket 20 bestehen in jeder Schicht 100,200 die Blechbereiche 6,115,116,117,126,215,216, 217 aus einem Blech 15.

Bei einem Ausführungsbeispiel einer Verwendung von Blechen 15 für den Rotor 10 werden diese Bleche 15 für alle Blechbereiche 6,115,116,117,126,215,216,217 des Rotors 10 verwendet, die die befestigten Blechbereiche 115,116,117,126,215,216,217 umfassen, wobei die befestigten Blechbereiche an mindestens einer Flussleitsperre 11,31,1113,3113 angrenzen, die mit der nicht-ferromagnetischen Vergussmasse (5) ausgegossen ist, und die in die Vergussmasse 5 hineinragende Stege 111,112,113, 121,122,124,211,212,213,221,222 aufweisen, die zumindest teilweise in mindestens einer Richtung 7,8,17,18 verlaufen, die eine Komponente in der axialen Richtung 3 aufweist. Die Bleche 15 weisen die gleichen Abmessungen auf und es wurden die gleichen Ausstanzungen an den Blechen 15 vorgenommen.

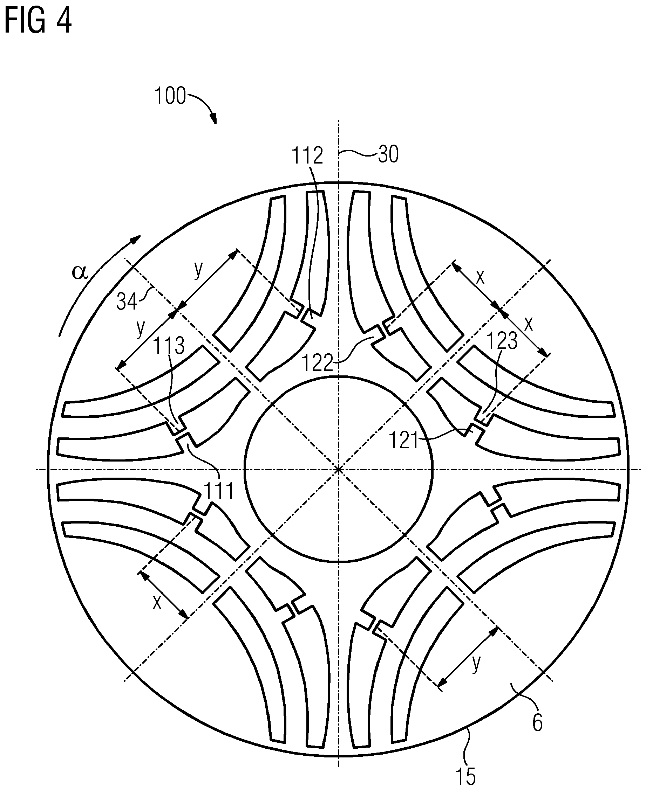

Die FIG 3 zeigt ein Ausführungsbeispiel eines in der FIG 1 und FIG 2 als benachbarte Schicht 200 in der Orientierung gemäß FIG 3 verwendeten Blechs 15. FIG 4 zeigt ein Ausführungsbeispiel eines in der FIG 1 und FIG 2 als Schicht 100 in der Orientierung gemäß FIG 4 verwendeten Blechs 15. Die Bleche 15 in FIG 3 und FIG 4 weisen die gleichen Abmessungen und die gleichen Ausstanzungen auf müssen zum leichteren Verständnis der nachfolgenden Beschreibung beide herangezogen werden. Verdreht man das Blech 15 für die Schicht 200 um einen Verdrehwinkel β, so nimmt das Blech 15 eine Lage ein, in der es in Abmessungen und Ausstanzungen deckungsgleich zu der Schicht 100 in FIG 3 ist. Anders ausgedrückt bedeutet dies, dass befestigte Blechbereiche 115,116,215,216 Berandungen 1110,1130,2110,2130 aufweisen, die jeweils mindestens einen hineinragenden Steg 111, 113,211,213 aufweisen, wobei sich jede Schicht 100 in Bezug auf diese Berandungen 1110,1130, 2110,2130 aus einer benachbarten Schicht 200 durch Verdrehen der benachbarten Schicht 200 um einen Verdrehwinkel β ergibt, wobei in jeder Schicht 100 mindestens ein hineinragender Steg 121,122,123,211,212,213 unsymmetrisch zu mindestens einem ersten hineinragenden Steg 111,112,113,221,222,223 bezüglich einer Symmetrieachse angeordnet ist, wobei die Symmetrieachse eine Winkelhalbierende 30 zu dem Verdrehwinkel β ist. Der mindestens eine hineinragende Steg 211,213, der unsymmetrisch zu mindestens einem ersten hineinragenden Steg 111,113 bezüglich der Symmetrieachse 30 angeordnet ist, ist ein benachbarter hineinragender Steg 211,213. In dem Ausführungsbeispiel gemäß der FIG 3, erstreckt sich die Winkelhalbierende 30 entlang eines d-Kreisradius 30. Die Berandungen 1110,1130,2110, 2130 der befestigten Blechbereiche 115,116,215,216 sind zwischen einem ersten und einem zweiten Kreisradius achssymmetrisch zu der Symmetrieachse (Winkelhalbierende 30). Wenn zwischen dem ersten und dem zweiten Kreisradius mehrere magnetische Pole des Rotors 10 vorhanden sind, so kann ein mechanisches Stabilisieren einer Anordnung mehrerer magnetischer Polbereiche der magnetischen Pole des Rotors 10 vorteilhaft kostengünstig in hoher Qualität in verschiedenen radialen Richtungen 4 der Anordnung in vorteilhaft gleichem Maße erfolgen. Hierbei erstreckt sich in der FIG 3 der erste Kreisradius entlang einer Hälfte der zweite Kreisradius entlang der zweiten Hälfte der horizontalen Linie 32, so dass bei dieser Betrachtungsweise der erste Kreisradius durch ein Verdrehen um den Verdrehwinkel 2 * β auf dem zweiten Kreisradius zu liegen kommt.

Liegt die Achssymmetrie auch vor, wenn sich zweite Kreisradius 34 durch Verdrehen um den Verdrehwinkel β aus dem ersten Kreisradius 33 ergibt, so kann auch ein mechanisches Stabilisieren eines magnetischen Pols des Rotors 10 vorteilhaft kostengünstig in hoher Qualität in verschiedenen radialen Richtungen der Anordnung in vorteilhaft gleichem Maß erfolgen.

Der mindestens eine hineinragende Steg 211,213 kann einen Abstand x von dem ersten Kreisradius 33 aufweisen, der geringer ist als ein Abstand y des mindestens einen ersten hineinragenden Stegs 111,113 von dem zweiten Kreisradius 34, wobei der Verdrehwinkel β von dem ersten Kreisradius 33 zu dem zweiten Kreisradius 34 gemessen ist, wobei der mindestens eine hineinragende Steg 211,213 in der Drehrichtung α vor dem ersten Kreisradius 33 vorhanden ist und der mindestens eine erste hineinragende Steg 111,113 in der Drehrichtung α vor dem zweiten Kreisradius 34 vorhanden ist.

Ein weiterer hineinragender Steg 212, der unsymmetrisch zu einem weiteren ersten hineinragenden Steg 112 bezüglich der Symmetrieachse 30 angeordnet ist, weist einen Abstand x von dem ersten Kreisradius 33 auf, der geringer ist, als ein Abstand y des weiteren ersten hineinragenden Stegs 112 von dem zweiten Kreisradius 34, wobei der Drehwinkel α von dem ersten zum zweiten Kreisradius gemessen ist, wobei der weitere hineinragende Steg 212 in der Drehrichtung α nach dem ersten Kreisradius 33 vorhanden ist und der weitere erste hineinragende Steg 112 in der Drehrichtung α nach dem zweiten Kreisradius 34 vorhanden ist. In den Ausführungsbeispielen gemäß den FIG 1 bis FIG 4 beträgt der Verdrehwinkel β 90°. So weist der Rotor 10 gemäß FIG 1 vier magnetische Pole auf. Jeweils eine Schicht 100,200 mit befestigten Blechbereichen 115,215 weist aneinander grenzende Kreissektoren auf, die jeweils durch zwei d-Kreisradien 30,32 begrenzt sind, wobei in jeder Schicht 100,200 mit befestigten Blechbereichen 115,215 durch die Blechbereiche 6,115,116,117,126,215,216,217 mehrere gebogene, streifenförmige und jeweils durch die Flussleitsperren 11,31,1113,3113 voneinander getrennte Flussabschnitte gebildet sind, die sich jeweils in ihrer Längserstreckung quer zu einer q-Achse 33,34 des Rotors 10 erstrecken, wobei die q-Achse 33,34 entlang einer Winkelhalbierenden der zwei d-Kreisradien 30, 32 verläuft. Das Ausführungsbeispiel des Rotors 10 gemäß FIG 1 ist somit ein Reluktanzrotor. In dem Ausführungsbeispiel der benachbarten Schicht 200 in FIG 3 erstreckt sich eine q-Achse 33 entlang dem ersten Kreisradius 33 und die zweite q-Achse 34 entlang dem zweiten Kreisradius 34.

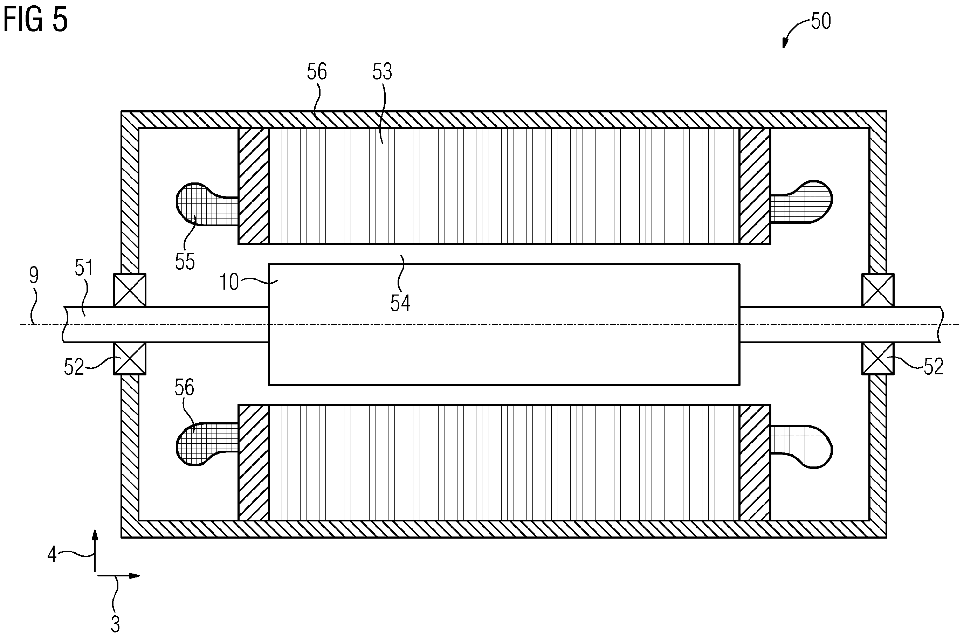

FIG 5 zeigt ein Ausführungsbeispiel einer elektrischen Maschine 50, die den Rotor 10 umfasst. Weiter umfasst die elektrische Maschine 50 einen Stator 53, der im Betrieb der elektrischen Maschine 50 über einen Luftspalt 54 mit dem Rotor 10 magnetisch zusammenwirkt, wobei der Rotor 10 um eine Drehachse 9 drehbar gelagert ist, wobei die Drehachse 9 in der axialen Richtung 3 verläuft. Der Rotor 10 ist an einer Welle 51 befestigt, die durch den Durchgang 12 des Rotors verläuft. Der Rotor 10 ist über die Welle 51 mit einer ersten und einer zweiten Lagervorrichtung 52 um die Drehachse 9 drehbar in einem Gehäuse 56 der elektrischen Maschine 50 gelagert. Der Stator 53 ist drehfest in dem Gehäuse 56 befestigt und weist mindestens eine Wicklung 55 auf, die sich in der axialen Richtung 3 entlang des Luftspalts 54 erstreckt. Beim Betrieb der elektrischen Maschine 50 mit einem Rotor 10 als Motor wird über die mindestens eine Wicklung 55 elektrische Energie zugeführt und durch das magnetische Zusammenwirken zwischen den magnetischen Polen des Stators 53 und des Rotors 10 über den Luftspalt 54 elektrische Energie in mechanische Energie umgewandelt. Dabei wird der Rotor 10 in Drehung um die Drehachse 9 versetzt und es kann an der Welle 51 mechanische Energie an einen mechanischen Verbraucher in Form einer Drehbewegung abgegeben werden. Die magnetischen Pole des Stators 53 und des Rotors 10 können sich bei einem Betrieb der elektrischen Maschine ausbilden, wenn der Stator mehrere Wicklungen 55,56 aufweist, die mit Wechselströmen unterschiedlicher Phasen einer Drei-Phasen-Wechselstromquelle bestromt werden, um ein Drehfeld zu erzeugen, das eine Drehbewegung des Rotors 10 um die Drehachse 9 bewirkt.

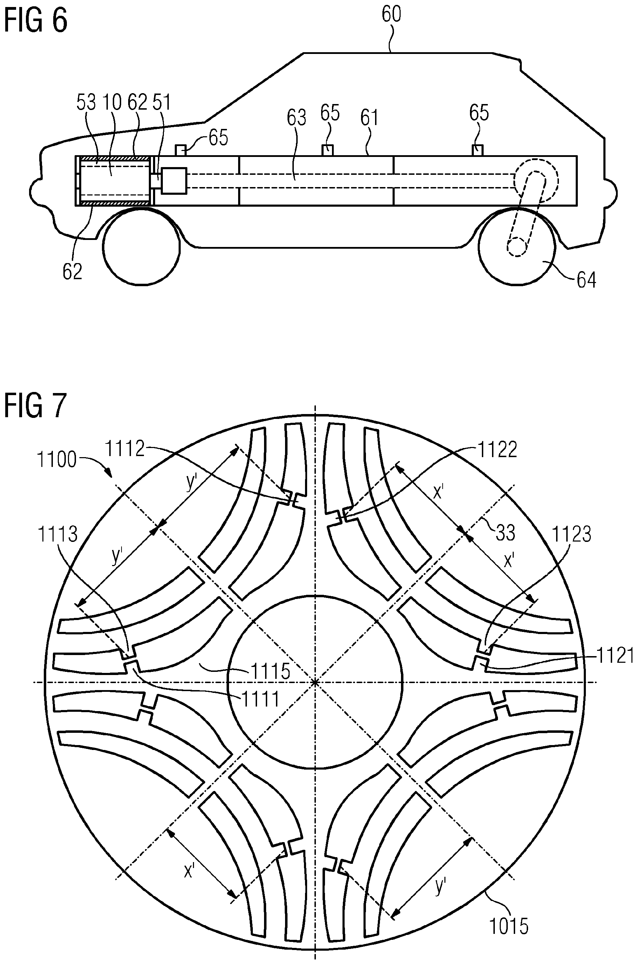

FIG 6 zeigt ein Ausführungsbeispiel eines Kraftfahrzeugs 60, das den Rotor 10 umfasst. Der Stator 53, der im Betrieb des Kraftfahrzeugs 60 über einen Luftspalt mit dem Rotor 10 magnetisch zusammenwirkt, ist mit einer Befestigungsvorrichtung 62,65 an dem Kraftfahrzeug 60 befestigt. Die Befestigungsvorrichtung umfasst eine Presspassung 62, mit der der Stator 53 in einer Hülle 61 befestigt ist und Halterungen 65, mit denen die Hülle 61 an dem Kraftfahrzeug 60 befestigt ist. Die Hülle 61 umgibt so mindestens einen Teilbereich des Kraftfahrzeugs 60, wobei der Teilbereich einen Antriebsstrang 63 des Kraftfahrzeugs 60 umfasst. Der Antriebsstrang 63 überträgt im Betrieb des Kraftfahrzeugs 60 eine Drehbewegung des Rotors 10 auf ein Hinterrad 64 des Kraftfahrzeugs. Hierzu ist die Welle 51 mit dem Antriebsstrang 63 gekoppelt.

FIG 7 zeigt ein Ausführungsbeispiel eines als eine weitere benachbarte Schicht 1100 bezeichneten Blechs 1015 für ein drittes Ausführungsbeispiel eines Rotors, wobei sich bei dem Rotor zwischen einer Schicht 100 und einer zu der Schicht 100 benachbarten Schicht 200 die weitere benachbarte Schicht 1100 angeordnet ist. Dabei ragt zwischen der Schicht 100 und der benachbarten Schicht 200 in die Vergussmasse 5 der Flussleitsperren 11,31,1113,3113 kein hineinragender Steg hinein, der in der axialen Richtung 3 über einen hineinragenden Steg (111,112,113,121,122,124) der Schicht 100 liegt. Hierzu weist der mindestens eine hineinragende Steg 1121 einen Abstand x' von dem ersten Kreisradius 33 auf, der größer ist als der Abstand y des mindestens einen ersten hineinragenden Stegs 111,113 von dem zweiten Kreisradius 34. Das Blech 1115 gemäß der FIG 7 ist wie das Blech 15 ausgeführt, nur dass der Abstand x' und ein zu dem Abstand x' größer Abstand y' vorhanden ist, wobei die Abstände x', y' in der gleiche Weise vorteilhaft kostengünstig in einer hohen Qualität für ein mechanisches Stabilisieren des Rotors verwendet werden können. Bei einem vierten Ausführungsbeispiel eines Rotors kann so in der axialen Richtung 3 eine Schichtenfolge aus einem Blech 15 gemäß FIG 4, einen verdrehten Blech 15 gemäß FIG 3, einem Blech 1115 gemäß FIG 7 und einem verdrehten Blech 1115 gemäß FIG 7 verwendet werden. Bei einem fünften Ausführungsbeispiel eines Rotors wird ein Blech verwendet, das vier Kreisradien aufweisen von denen die hineinragenden Stege jeweils unterschiedliche Abstände x, y, x', y' aufweisen. So kann man durch Verdrehen des Bleches von einer Schicht zu nächsten Schicht jeweils um 90° erreichen, dass zwischen dem hineinragenden Steg einer Schicht und dem nächsten in axialer Richtung 3 über ihn liegenden hineinragenden Steg drei benachbarte Schichten vorhanden sind, die einen Freiraum für die Vergussmasse zwischen den hineinragenden Steg und dem über ihn liegenden hineinragenden Steg ermöglichen, der mit Vergussmasse ausgegossen ist.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

## Patentansprüche

1. Rotor (10) für eine elektrische Maschine (50), umfassend
- ein Blechpaket(20), das sich in einer axialen Richtung (3) von einem ersten axialen Ende (1) zu einem zweiten axialen Ende (2) erstreckt,
- wobei das Blechpaket (20) in der axialen Richtung (3) geschichtete Schichten (100,200,1100) aufweist,
- wobei jede Schicht (100,200,1100) mehrere Blechbereiche (6,115,116,117,126,215,216,217,1115) aufweist,
- wobei Flussleitsperren (11,31,1113,3113) vorhanden sind, die zwischen angrenzenden Blechbereichen (6,115,116,215, 216) liegen,
- wobei mindestens eine Flussleitsperre (11,31,1113,3113) mit einer nicht-ferromagnetischen Vergussmasse (5) ausgegossen ist,
- wobei sich die Vergussmasse (5) in der mindestens einen Flussleitsperre (11,31,1113,3113) jeweils von dem ersten axialen Ende (1) zu dem zweiten axialen Ende (2) erstreckt,
- wobei befestigte Blechbereiche (115,116,117,126,215,216,217,1115) vorhanden sind, die jeweils mindestens einen in die Vergussmasse (5) hineinragenden Steg (111,112,113,121,122,124, 211,212,213,221,222,1111,1112,112,1122,1123) aufweisen,
- wobei in jeder Schicht (100,200,1100) mindestens ein erster Blechbereich (115,215,1115) ein befestigter Blechbereich ist,
**dadurch gekennzeichnet, dass**
- -der hineinragende Steg zumindest teilweise in mindestens einer Richtung (7,8,17,18) verläuft, die eine Komponente in axialer Richtung (3) aufweist,
- wobei zwischen einer Schicht (100) und einer zu der Schicht (100) benachbarten Schicht (200,1100) in die Vergussmasse (5) der Flussleitsperren (11,31,1113,3113) kein hineinragender Steg hineinragt, der in der axialen Richtung (3) über einen hineinragenden Steg (111,112,113,121,122,124) der Schicht (100) liegt.

2. Rotor (10) nach Anspruch 1, wobei eine Schicht (100) eine benachbarte Schicht (200) aufweist, in der ein erster Blechbereich (215) vorhanden ist, der einen benachbarten hineinragenden Steg (211) aufweist, wobei der benachbarte hineinragende Steg (211) in einer Drehrichtung (α) nach einem ersten hineinragenden Steg (111) des ersten Blechbereichs (115) der Schicht (100) in der Vergussmasse (5) benachbart verläuft.

3. Rotor (10) nach Anspruch 1 oder 2, wobei in jeder Schicht (100,200,1100) ein zweiter Blechbereich (116,216) ein befestigter Blechbereich ist, wobei ein hineinragender Steg (111,211,1111) des ersten Blechbereichs (115,215,1115) als ein gegenüberliegender hineinragender Steg von einem ersten hineinragenden Steg (113,213,1113) des zweiten Blechbereichs (116,216) durch die Vergussmasse (5) getrennt ist.

4. Rotor (10) nach einem der Ansprüche 2 bis 3, wobei in der benachbarten Schicht (200) ein dritter Blechbereich (217) vorhanden, der einen benachbarten hineinragenden Steg (212) aufweist, wobei der benachbarte hineinragende Steg (212) entgegen der Drehrichtung (α) nach einem ersten hineinragenden Steg (112) eines dritten Blechbereichs (117) der Schicht (100) in der Vergussmasse (5) benachbart verläuft.

5. Rotor (10) nach einem der vorhergehenden Ansprüche, wobei der mindestens eine hineinragende Steg eines befestigten Blechbereichs (115,116,117,126,215,216,217,1115)durch ein Verbiegen eines Teilbereichs eines Blechstücks entstanden ist, wobei das Blechstück den befestigten Blechbereich umfasst.

6. Rotor (10) nach einem der vorhergehenden Ansprüche, wobei in jeder Schicht die Blechbereiche (6,115,116,117,126,215, 216,217,1115) aus einem Blech (15,1015), insbesondere aus einem Elektroblech hergestellt, bestehen.

7. Rotor (10) nach einem der vorhergehenden Ansprüche, wobei die befestigten Blechbereiche (115,116,215,216) Berandungen (1110,1130,2110,2130) aufweisen, die jeweils mindestens einen hineinragenden Steg (111,113,211,213) aufweisen, wobei sich jede Schicht (100) in Bezug auf diese Berandungen (1110,1130, 2110,2130) aus einer benachbarten Schicht (200) durch Verdrehen der benachbarten Schicht (200) um einen Verdrehwinkel (β) ergibt, wobei in jeder Schicht (100) mindestens ein hineinragender Steg (121,122,123,211,212,213) unsymmetrisch zu mindestens einem ersten hineinragenden Steg (111,112,113,221, 222,223) bezüglich einer Symmetrieachse angeordnet ist, wobei die Symmetrieachse eine Winkelhalbierende (30) zu dem Verdrehwinkel (β) ist.

8. Rotor (10) nach einem der vorhergehenden Ansprüche, wobei der Rotor (10) eine weitere Schicht (14) aufweist, die in der axialen Richtung (3) die geschichteten Schichten (100,200, 1100) an dem zweiten axialen Ende (2) des Blechpakets fortsetzt, wobei die weitere Schicht (14) höchstens Blechbereiche aufweist, die keine hineinragenden Stege aufweisen.

9. Rotor (10) nach einem der vorhergehenden Ansprüche, wobei jeweils eine Schicht (100,200,1100) mit befestigten Blechbereichen aneinander grenzende Kreissektoren aufweist, die jeweils durch zwei d-Kreisradien (30,32) begrenzt sind, wobei in jeder Schicht (100,200,1100) mit befestigten Blechbereichen durch die Blechbereiche (6,115,116,117,126,215,216,217, 1115) mehrere gebogene, streifenförmige und jeweils durch die Flussleitsperren (11,31,1113,3113) voneinander getrennte Flussleitabschnitte gebildet sind, die sich jeweils in ihrer Längserstreckung quer zu einer q-Achse (33,34) des Rotors (10) erstrecken, wobei die q-Achse entlang einer Winkelhalbierenden der zwei d-Kreisradien (30,32) verläuft.

10. Elektrische Maschine (50), umfassend einen Rotor (10) nach einem der Ansprüche 1 bis 9, und
- einen Stator (53), der in einem Betrieb der elektrischen Maschine (50) über einen Luftspalt (54) mit dem Rotor (10) magnetisch zusammenwirkt,
- wobei der Rotor (10) um eine Drehachse (9) drehbar gelagert ist, wobei die Drehachse (9) in der axialen Richtung (3) verläuft.

11. Kraftfahrzeug (60), umfassend einen Rotor (10) nach einem der Ansprüche 1 bis 9.

12. Blechpaket (20) für einen Rotor (10) nach einem der Ansprüche 1 bis 9,
- wobei sich das Blechpaket (20) in einer axialen Richtung (3) von einem ersten axialen Ende (1) zu einem zweiten axialen Ende (2) erstreckt,
- wobei das Blechpaket (20) in der axialen Richtung (3) geschichtete Schichten (100,200,1100) aufweist,
- wobei jede Schicht (100,200,1100) mehrere Blechbereiche (6,115,116,117,126,215,216,217,1115) aufweist,
- wobei Flussleitsperren (11,31,1113,3113) vorhanden sind, die zwischen angrenzenden Blechbereichen (6,115,116,215, 216) liegen,
- wobei befestigte Blechbereiche (115,116,117,126,215,216,217,1115) vorhanden sind, die jeweils mindestens einen in die Vergussmasse (5) hineinragenden Steg (111,112,113,121,122,124,211,212,213,221,222,1111,1112,112, 1122,1123) aufweisen,
- wobei die hineinragenden Stege in Freiräume (311,312,321, 322,331,332,341,342) mindestens einer Flussleitsperre (11,31,1113,3113) für die Vergussmasse (5) hineinragen,
- wobei in jeder Schicht (100,200,1100) mindestens ein erster Blechbereich (115,215,1115) ein befestigter Blechbereich ist,
**dadurch gekennzeichnet, dass**
- der hineinragende Steg zumindest teilweise in mindestens einer Richtung (7,8,17,18) verläuft, die eine Komponente in axialer Richtung (3) aufweist,
- wobei zwischen einer Schicht (100) und einer zu der (100) benachbarten Schicht (200,1100) in die Freiräume (311,312,321,322,331,332,341,342) für die Vergussmasse (5) der Flussleitsperren (11,31,1113,3113) kein hineinragender Steg hineinragt, der in der axialen Richtung (3) über einen hineinragenden Steg (111,112,113,121,122,124) der Schicht (100) liegt.

13. Verfahren zur Herstellung eines Rotors (10) nach einem der Ansprüche 1 bis 9,
- wobei das Blechpaket (20) bereitgestellt wird,
- das in der axialen Richtung (3) geschichtete Schichten (100,200,1100) aufweist,
- wobei jede Schicht (100,200,1100) mehrere Blechbereiche (115,215,1115) aufweist,
- wobei Freiräume (311,312,321,322,331,332,341,342) für die Flussleitsperren (22) vorhanden sind, die zwischen angrenzenden Blechbereichen (115,215,1115) liegen,
- wobei die Freiräume (311,312,321,322,331,332,341,342) mindestens einer Flussleitsperre (11,31,1113,3113) in der axialen Richtung (3) zwischen den in die Freiräume (311,312, 321,322,331,332,341,342) hineinragenden Stege (111,112,113, 121,122,124,211,212,213,221,222,1111,1112,112,1122,1123) ausgegossen werden,
**dadurch gekennzeichnet, dass**
die hineinragende Stege zumindest teilweise in mindestens einer Richtung (7,8,17,18) verlaufen, die eine Komponente in axialer Richtung (3) aufweist,
- wobei zwischen einer Schicht (100) und einer zu der Schicht (100) benachbarten Schicht (200,1100) in die Vergussmasse (5) der Flussleitsperren (11,31,1113,3113) kein hineinragender Steg hineinragt, der in der axialen Richtung (3) über einen hineinragenden Steg (111,112,113,121,122,124) der Schicht (100) liegt.

14. Verwendung von Blechen (15,1115) für einen Rotor (10) nach einem der Ansprüche 1 bis 9, wobei die Bleche (15,1115) für befestigte Blechbereiche (115,116,117,126,215,216,217, 1115) des Rotors (10) verwendet werden,
- die an mindestens einer Flussleitsperre (11,31,1113,3113) angrenzen, wobei die mindestens eine Flussleitsperre (11, 31,1113,3113) mit der nicht-ferromagnetischen Vergussmasse (5) ausgegossen ist, und
**dadurch gekennzeichnet, dass**
- die Bleche in die Vergussmasse (5) hineinragende Stege (111,112, 113,121,122,124,211, 212,213,221,222,1111) aufweisen, die zumindest teilweise in mindestens einer Richtung verlaufen, die eine Komponente in axialer Richtung (3) aufweist,
- wobei zwischen einer Schicht (100) und einer zu der Schicht (100) benachbarten Schicht (200,1100) in die Vergussmasse (5) der Flussleitsperren (11,31,1113,3113) kein hineinragender Steg hineinragt, der in der axialen Richtung (3) über einen hineinragenden Steg (111,112,113,121,122,124) der Schicht (100) liegt.

## Claims

1. Rotor (10) for an electrical machine (50), comprising
- a laminated core (20) which extends in an axial direction (3) from a first axial end (1) to a second axial end (2),
- wherein the laminated core (20) comprises layers (100, 200, 1100) stacked in the axial direction (3),
- wherein each layer (100, 200, 1100) comprises a plurality of lamination regions (6, 115, 116, 117, 126, 215, 216, 217, 1115),
- wherein flux barriers (11, 31, 1113, 3113) are present which lie between adjacent lamination regions (6, 115, 116, 215, 216),
- wherein at least one flux barrier (11, 31, 1113, 3113) is filled with a non-ferromagnetic casting compound (5),
- wherein the casting compound (5) extends in the at least one flux barrier (11, 31, 1113, 3113) in each case, from the first axial end (1) to the second axial end (2),
- wherein fastened lamination regions (115, 116, 117, 126, 215, 216, 217, 1115) are present which each have at least one web (111, 112, 113, 121, 122, 124, 211, 212, 213, 221, 222, 1111, 1112, 112, 1122, 1123) protruding into the casting compound (5),
- wherein, in each layer (100, 200, 1100), at least one first lamination region (115, 215, 1115) is a fastened lamination region,
**characterised in that**
- the inwardly protruding web extending at least partially in at least one direction (7, 8, 17, 18) which has a component in the axial direction (3),
- wherein no inwardly protruding web which lies in the axial direction (3) over an inwardly protruding web (111, 112, 113, 121, 122, 124) of the layer (100) extends into the casting compound (5) of the flux barriers (11, 31, 1113, 3113) between a layer (100) and a layer (200, 1100) adjacent to the layer (100).

2. Rotor (10) according to claim 1, one layer (100) having an adjacent layer (200) in which a first lamination region (215) is present which has an adjacent inwardly protruding web (211), wherein the adjacent inwardly protruding web (211) extends in a rotation direction (α) adjacently following a first inwardly protruding web (111) of the first lamination region (115) of the layer (100) in the casting compound (5).

3. Rotor (10) according to claim 1 or 2, wherein in each layer (100, 200, 1100), a second lamination region (116, 216) is a fastened lamination region, wherein an inwardly protruding web (111, 211, 1111) of the first lamination region (115, 215, 11115) is separated as an opposite inwardly protruding web from a first inwardly protruding web (113, 213, 1113) of the second lamination region (116, 216) by the casting compound (5) .

4. Rotor (10) according to one of claims 2 to 3, wherein present in the adjacent layer (200) is a third lamination region (217) which has an adjacent inwardly protruding web (212), wherein the adjacent inwardly protruding web (212) extends against the rotation direction (α) following a first inwardly projecting web (112) of a third lamination region (117) of the layer (100) in the casting compound (5).

5. Rotor (10) according to one of the preceding claims, wherein the at least one inwardly protruding web of a fastened lamination region (115, 116, 117, 126, 215, 216, 217, 1115) has arisen by means of a bending of a subregion of a lamination piece, wherein the lamination piece comprises the fastened lamination region.

6. Rotor (10) according to one of the preceding claims, wherein in each layer, the lamination regions (6, 115, 116, 117, 126, 215, 216, 217, 1115) consist of a lamination (15, 1015) made, in particular, of a magnetic steel sheet.

7. Rotor (10) according to one of the preceding claims, the fastened lamination regions (115, 116, 215, 216) having boundaries (1110, 1130, 2110, 2130) which each have at least one inwardly protruding web (111, 113, 211, 213) wherein each layer (100) results in relation to these boundaries (1110, 1130, 2110, 2130) from an adjacent layer (200) by rotation of the adjacent layer (200) through a twist angle (β), wherein in each layer (100) at least one inwardly protruding web (121, 122, 123, 211, 212, 213) is arranged asymmetrically to at least one first inwardly protruding web (111, 112, 113, 221, 222, 223) in relation to a symmetry axis, wherein the symmetry axis is an angle bisector (30) of the twist angle (β).

8. Rotor (10) according to one of the preceding claims, the rotor (10) having a further layer (14) which continues the stacked layers (100, 200, 1100) at the second axial end (2) of the laminated core in the axial direction (3), wherein the further layer (14) has at most lamination regions which have no inwardly protruding webs.

9. Rotor (10) according to one of the preceding claims, wherein in each case, a layer (100, 200, 1100) with fastened lamination regions has mutually adjacent circular sectors which are each delimited by two d-circle radii (30, 32), wherein in each layer (100, 200, 1100) with fastened lamination regions, though the lamination regions (6, 115, 116, 117, 126, 215, 216, 217, 1115) a plurality of bent, strip-shaped flux conduction portions are formed, respectively separated from one another by the flux barriers (11, 31, 1113, 3113), which each extend in their longitudinal extent transversely to a q-axis (33, 34) of the rotor (10), wherein the q-axis extends along an angle bisector of the two d-circle radii (30, 32).

10. Electrical machine (50) comprising a rotor (10) according to one of claims 1 to 9, and
- a stator (53) which during an operation of the electrical machine (50) cooperates magnetically with the rotor (10) via an air gap (54),
- wherein the rotor (10) is mounted rotatably about a rotation axis (9), the rotation axis (9) extending in the axial direction (3).

11. Motor vehicle (60) comprising a rotor (10) according to one of claims 1 to 9.

12. A laminated core (20) for a rotor (10) according to one of claims 1 to 9,
- wherein the laminated core (20) extends in an axial direction (3) from a first axial end (1) to a second axial end (2),
- wherein the laminated core (20) comprises layers (100, 200, 1100) stacked in the axial direction (3),
- wherein each layer (100, 200, 1100) comprises a plurality of lamination regions (6, 115, 116, 117, 126, 215, 216, 217, 1115),
- wherein flux barriers (11, 31, 1113, 3113) are present which lie between adjacent lamination regions (6, 115, 116, 215, 216),
- wherein fastened lamination regions (115, 116, 117, 126, 215, 216, 217, 1115) are present which each have at least one web (111, 112, 113, 121, 122, 124, 211, 212, 213, 221, 222, 1111, 1112, 112, 1122, 1123) protruding into the casting compound (5),
- wherein the inwardly protruding webs extend into free spaces (311, 312, 321, 322, 331, 332, 341, 342) of at least one flux barrier (11, 31, 1113, 3113) for the casting compound (5),
- wherein, in each layer (100, 200, 1100), at least one first lamination region (115, 215, 1115) is a fastened lamination region,
**characterised in that**
- the inwardly protruding web at least partially extends in at least one direction (7, 8, 17, 18) which has a component in the axial direction (3),
- wherein no inwardly protruding web which lies in the axial direction (3) over an inwardly protruding web (111, 112, 113, 121, 122, 124) of the layer (100) extends into the free spaces (311, 312, 321, 322, 331, 332, 341, 342) for the casting compound (5) of the flux barriers (11, 31, 1113, 3113) between a layer (100) and a layer (200, 1100) adjacent to the layer (100).

13. Method for manufacturing a rotor (10) according to one of claims 1 to 9,
- wherein the laminated core (20) is provided,
- which comprises layers (100, 200, 1100) stacked in the axial direction (3),
- wherein each layer (100, 200, 1100) comprises a plurality of lamination regions (115, 215, 1115),
- wherein free spaces (311, 312, 321, 322, 331, 332, 341, 342) for the flux barriers (22) are present, lying between adjacent lamination regions (115, 215, 1115),
- wherein the free spaces (311, 312, 321, 322, 331, 332, 341, 342) of at least one flux barrier (11, 31, 1113, 3113) are filled in the axial direction (3) between the webs (111, 112, 113, 121, 122, 124, 211, 212, 213, 221, 222, 1111, 1112, 112, 1122, 1123) inwardly protruding into the free spaces (311, 312, 321, 322, 331, 332, 341, 342),
**characterised in that**
- the inwardly extending webs extend at least partially in at least one direction (7, 8, 17, 18) which has a component in the axial direction (3),
- wherein no inwardly protruding web which lies in the axial direction (3) over an inwardly protruding web (111, 112, 113, 121, 122, 124) of the layer (100) extends into the casting compound (5) of the flux barriers (11, 31, 1113, 3113) between a layer (100) and a layer (200, 1100) adjacent to the layer (100).

14. Use of laminations (15, 1115) for a rotor (10) according to one of claims 1 to 9, wherein the laminations (15, 1115) are used for fastened lamination regions (115, 116, 117, 126, 215, 216, 217, 1115) of the rotor (10),
- which adjoin at least one flux barrier (11, 31, 1113, 3113), the at least one flux barrier (11, 31, 1113, 3113) being filled with the non-ferromagnetic casting compound (5), and **characterised in that**
- the laminations have webs (111, 112, 113, 121, 122, 124, 211, 212, 213, 221, 222, 1111) inwardly protruding into the casting compound (5), which extend at least partially in at least one direction which has a component in the axial direction (3),
- wherein no inwardly protruding web which lies in the axial direction (3) over an inwardly protruding web (111, 112, 113, 121, 122, 124) of the layer (100) extends into the casting compound (5) of the flux barriers (11, 31, 1113, 3113) between a layer (100) and a layer (200, 1100) adjacent to the layer (100).

## Revendications

1. Rotor (10) pour une machine (50) électrique, comprenant
- un paquet (20) de tôles, qui s'étend dans une direction (3) axiale d'une première extrémité (1) à une seconde extrémité (2) axiale,
- dans lequel le paquet (20) de tôles a des couches (100, 200, 1100) feuilletées dans la direction (3) axiale,
- dans lequel chaque couche (100, 200, 1100) a plusieurs régions (6, 115, 116, 117, 126, 215, 216, 217, 1115) de tôle,
- dans lequel il y a des arrêts (11, 31, 1113, 3113) de conductance entre deux régions (6, 115, 116, 215, 216) de tôle voisines,
- dans lequel au moins un arrêt (11, 31, 1113, 3113) de conductance est coulé en une composition (5) de coulée non-ferromagnétique,
- dans lequel la composition (5) de coulée s'étend dans le au moins un arrêt (11, 31, 1113, 3113) de conductance, respectivement de la première extrémité (1) axiale à la seconde extrémité (2) axiale,
- dans lequel il y a des régions (115, 116, 117, 126, 215, 216, 217, 1115) de tôle fixées, qui ont chacune une réglette (111, 112, 113, 121, 122, 124, 211, 212, 213, 221, 222, 1111, 1112, 112, 1122, 1123) pénétrant dans la composition (5) coulée,
- dans lequel, dans chaque couche (100, 200, 1100), au moins une première région (115, 215, 1115) de tôle est une région de tôle fixée,
**caractérisé en ce que**
- la réglette pénétrante s'étend, au moins en partie, dans une direction (7, 8, 17, 18), qui a une composante dans la direction (3) axiale,
- dans lequel il n'y a pas, entre une couche (100) et une couche (200, 1100) voisine de la couche (100) dans la composition (5) coulée des arrêts (11, 31, 1113, 3113) de conductance, de réglettes, qui se trouvent dans la direction (3) axiale au-dessus d'une réglette (111, 112, 113, 121, 122, 124) pénétrante de la couche (100).

2. Rotor (10) suivant la revendication 1, dans lequel une couche (100) a une couche (200) voisine, dans laquelle il y a une première région (215) de tôle, qui a une réglette (211) pénétrante voisine, la réglette (211) pénétrante voisine s'étendant au voisinage dans la composition (5) coulée dans un sens (α) de rotation, après une première réglette (111) pénétrante de la première région (115) de tôle de la couche (100).

3. Rotor (10) suivant la revendication 1 ou 2, dans lequel, dans chaque couche (100, 200, 1100), une deuxième région (116, 216) de tôle est une région de tôle fixée, dans lequel une réglette (111, 211, 1111) pénétrante de la première région (115, 215, 1115) de tôle est sous la forme d'une réglette pénétrante opposée séparée par la composition (5) coulée d'une première réglette (113, 213, 1113) pénétrante de la deuxième région (116, 216) de tôle.

4. Rotor (10) suivant l'une des revendications 2 à 3, dans lequel il y a, dans la couche (200) voisine, une troisième région (217) de tôle, qui a une réglette (212) pénétrante voisine, la réglette (212) pénétrante voisine s'étendant au voisinage dans la composition (5) coulée dans le sens contraire au sens (α) de rotation, après une première réglette (112) pénétrante d'une troisième région (117) de tôle de la couche (100).

5. Rotor (10) suivant l'une des revendications précédentes, dans lequel la au moins une réglette pénétrante d'une région (115, 116, 117, 126, 215, 216, 217, 1115) de tôle fixée est créée en cintrant une région partielle d'une pièce de tôle, la pièce de tôle comprenant la région de tôle fixée.

6. Rotor (10) suivant l'une des revendications précédentes, dans lequel, dans chaque couches, les régions (6, 115, 116, 117, 126, 215, 216, 217, 1115) de tôle sont en une tôle (15, 1015), notamment en une tôle électrique.

7. Rotor (10) suivant l'une des revendications précédentes, dans lequel les régions (115, 116, 215, 216) de tôle fixées ont des bordures (1110, 1130, 2110, 2130) ayant chacune au moins une réglette (111, 113, 211, 213) pénétrante, chaque couche (100) provenant, par rapport à ses bordures (1110, 1130, 2110, 2130), d'une couche (200) voisine par torsion de la couche (200) voisine d'un angle (β) de torsion, dans lequel, dans chaque couche (100), au moins une réglette (121, 122, 123, 211, 212, 213) pénétrante est dissymétrique d'au moins une première réglette (111, 112, 113, 221, 222, 223) pénétrante par rapport à un axe de symétrie, l'axe de symétrie étant une bissectrice (30) de l'angle (β) de torsion.

8. Rotor (10) suivant l'une des revendications précédentes, dans lequel le rotor (10) a une autre couche (14), qui poursuit, dans la direction (3) axiale, les couches (100, 200, 1100) feuilletées à la seconde extrémité (2) axiale du paquet de tôles, l'autre couche (14) ayant, au plus, des régions de tôle qui n'ont pas de réglette pénétrante.

9. Rotor (10) suivant l'une des revendications précédentes, dans lequel respectivement une couche (100, 200, 1100) ayant des régions de tôle fixées à des secteurs de cercle voisins l'un de l'autre et délimités chacun par deux rayons (30, 32) de cercles d, dans lequel, dans chaque couche (100, 200, 1100) ayant des régions de tôle fixées, il est formé, par les régions (6, 115, 116, 117, 126, 215, 216, 217, 1115) de tôle, plusieurs segments de conductance séparés les uns des autres par les arrêts (11, 31, 1113, 3113) de conductance, segments qui s'étendent chacun dans son étendue en longueur transversalement à un axe (33, 34) q du rotor, l'axe q s'étendant suivant une bissectrice des deux rayons (30, 32) de cercle d.

10. Machine (50) électrique, comprenant un rotor (10) suivant l'une des revendications 1 à 9 et
- un stator (53), qui, lorsque la machine (50) électrique est en fonctionnement, coopère magnétiquement avec le rotor (10) par l'intermédiaire d'un entrefer (54),
- dans laquelle le rotor (10) est monté tournant autour d'un axe (9) de rotation, l'axe (9) de rotation s'étendant dans la direction (3) axiale.

11. Véhicule (60) automobile, comprenant un rotor (10) suivant l'une des revendications 1 à 9.

12. Paquet (20) de tôles pour un rotor (10) suivant l'une des revendications 1 à 9,
- dans lequel le paquet (20) de tôles s'étend dans une direction (3) axiale d'une première extrémité (1) axiale à une seconde extrémité (2) axiale,
- dans lequel le paquet (20) de tôles a des couches (100, 200, 1100) feuilletées dans la direction (3) axiale,
- dans lequel chaque couche (100, 200, 1100) a plusieurs régions (6, 115, 116, 117, 126, 215, 216, 217, 1115) de tôle,
- dans lequel il y a des arrêts (11, 31, 1113, 3113) de conductance entre des régions (6, 115, 116, 215, 216) de tôle voisines,
- dans lequel il y a des régions (115, 116, 117, 126, 215, 216, 217, 1115) de tôle fixées, qui ont chacune au moins une réglette (111, 112, 113, 121, 122, 124, 211, 212, 213, 221, 222, 1111, 1112, 112, 1122, 1123) pénétrant la composition (5) coulée,
- dans lequel les réglettes pénétrantes pénètrent dans des espaces (211, 312, 321, 322, 331, 332, 341, 342) libres au moins d'un arrêt (11, 31, 1113, 3113) de conductance pour la composition (5) coulée,
- dans lequel, dans chaque couche (100, 200, 1100), au moins une première région (115, 215, 1115) de tôle est une région de tôle fixée,
**caractérisé en ce que**
- la réglette pénétrante s'étend, au moins en partie, dans au moins une direction (7, 8, 17, 18), qui a une composante dans la direction (3) axiale,
- dans lequel, entre une couche (100) et une couche (200, 1100) voisine de la couche (100), il ne pénètre, dans les espaces libres (311, 312, 321, 322, 331, 332, 341, 342) pour la masse (5) coulée des arrêts (11, 31, 1113, 3113) de conductance, aucune réglette pénétrante, qui se trouve dans la direction (3) axiale au-dessus d'une réglette (111, 112, 113, 121, 122, 124) pénétrante de la couche (100).

13. Procédé de fabrication d'un rotor (10) suivant l'une des revendications 1 à 9,
- dans lequel on se procure le paquet (20) de tôles,
- qui a des couches (100, 200, 1100) feuilletées dans la direction (3) axiale,
- dans lequel chaque couche (100, 200, 1100) a plusieurs régions (115, 215, 1115) de tôle,
- dans lequel il y a des espaces (311, 312, 321, 322, 331, 332, 341, 342) libres pour les arrêts (22) de conductance, qui sont entre des régions (115, 215, 1115) de tôle voisines,
- dans lequel les espaces (311, 312, 321, 322, 331, 332, 341, 342) libres d'au moins un arrêt (11, 31, 1113, 3113) de conductance sont coulés dans la direction (3) axiale entre les réglettes (111, 112, 113, 121, 122, 124, 211, 212, 213, 221, 222, 1111, 1112, 112, 1122, 1123) pénétrant dans les espaces (311, 312, 321, 322, 331, 332, 341, 342) libres,
**caractérisé en ce que**
les réglettes pénétrantes s'étendent au moins dans une direction (7, 8, 17, 18), qui a une composante dans la direction (3) axiale,
- dans lequel, entre une couche (100) et une couche (200, 1100) voisine de la couche (100) dans la composition (5) coulée des arrêts (11, 31, 1113, 3113) de conductance, ne pénètre pas de réglette pénétrante, qui se trouve dans la direction (3) axiale au-dessus d'une réglette (111, 112, 113, 121, 122, 124) pénétrante de la couche (100).

14. Utilisation de tôles (15, 1115) pour un rotor (10) suivant l'une des revendications 1 à 9, les tôles (15, 1115) étant utilisées pour des régions (115, 116, 117, 126, 215, 216, 217, 1115) de tôle fixées du rotor (10),
- qui sont voisines d'au moins un arrêt (11, 31, 1113, 3113) de conductance, au moins un arrêt (11, 31, 1113, 3113) de conductance étant coulé en la composition (5) de coulée non ferromagnétique et
**caractérisée en ce que**
- les tôles ont des réglettes (111, 112, 113, 121, 122, 124, 211, 212, 213, 221, 222, 1111), qui pénètrent dans la composition (5) de coulée et qui s'étendent, au moins en partie, dans au moins une direction, qui a une composante dans la direction (3) axiale,
- dans laquelle, entre une couche (100) et une couche (200, 1100) voisine de la couche (100), ne pénètre pas, dans la composition (5) coulée des arrêts (11, 31, 1113, 3113) de conductance, de réglette, qui se trouve dans la direction (3) axiale au-dessus d'une réglette (111, 112, 113, 121, 122, 124) de la couche (100).
